(19) Europäisches Patentamt
European Patent Office
Office européen des brevets

(11) Publication number: **0 071 330 B1**

(12) **EUROPEAN PATENT SPECIFICATION**

(45) Date of publication of patent specification: **01.04.87**

(51) Int. Cl.$^4$: **C 08 J 7/04**, B 32 B 27/08, B 65 D 23/00

(21) Application number: **82302875.8**

(22) Date of filing: **03.06.82**

# (54) Plastic vessel excellent in storability.

(30) Priority: **03.06.81 JP 84277/81**
**03.06.81 JP 84278/81**

(43) Date of publication of application:
**09.02.83 Bulletin 83/06**

(45) Publication of the grant of the patent:
**01.04.87 Bulletin 87/14**

(84) Designated Contracting States:
**BE CH DE FR IT LI NL SE**

(56) References cited:
**FR-A-2 056 529**
**GB-A-1 146 647**
**US-A-3 821 182**
**US-A-4 228 215**

**The file contains technical information submitted after the application was filed and not included in this specification**

(73) Proprietor: **TOYO SEIKAN KAISHA LIMITED**
**3-1, Uchisaiwai-cho 1-chome Chiyoda-ku**
**Tokyo (JP)**

(72) Inventor: **Maruhashi, Yoshitsugu**
**828-3, Kandaiji Kanagawa-ku**
**Yokohama-shi Kanagawa-ken (JP)**
Inventor: **Tanikawa, Isao**
**423-146, Kontono**
**Ayase-shi Kanagawa-ken (JP)**
Inventor: **Yazaki, Jinichi**
**34-2, 3-chome Ikegami Ota-ku**
**Tokyo (JP)**
Inventor: **Hirata, Sadao**
**7-14, 1-chome Shimosueyoshi Tsurumi-ku**
**Yokohama-shi Kanagawa-ken (JP)**

(74) Representative: **Woodcraft, David Charles et al**
**BROOKES & MARTIN High Holborn House 52/54**
**High Holborn**
**London, WC1V 6SE (GB)**

**EP 0 071 330 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Background of the invention

(1) Field of the invention:

The present invention relates to a plastic vessel excellent in the storability. More particularly, the present invention relates to a plastic vessel having an excellent ultraviolet ray barrier property and an excellent gas barrier property, which can store food contents for a long time.

The present invention is based on the novel finding that if a layer composed mainly of an ethylene-vinyl alcohol copolymer and a coating layer of a vinylidene chloride-acrylic or methacrylic monomer copolymer (hereinafter referred to as "vinylidene chloride type resin") are formed contiguously to each other, the oxygen permeability constant of the resulting laminate is smaller than those of the two layers. Incidentally, oxygen permeability constant is expressed in the unit of $cm^3 \cdot cm/cm^2 \cdot s \cdot cmHg$, and this constant is irrelevant to the dimension of thickness.

(2) Description of the prior art

Plastic bottles prepared by melt-extruding and hollow-molding (blow-molding) thermoplastic plastics such as polyolefins are used in various fields instead of glass bottles because the plastic bottles have a lighter weight and a better shock resistance than the glass bottles.

General-purpose plastics such as polyolefins are excellent in moisture resistance and sanitary characteristics, but the oxygen permeability constant is relatively high and in bottles of these plastics, permeation of oxygen through bottle walls is not negligible.

Accordingly, bottles of general-purpose plastics are not suitable as vessels for preserving foods for a long time or as vessels for cosmetics and the like where a high flavor-retaining property is required.

As bottles in which this defect is overcome, there have been developed and proposed plastic bottles having a wall structure excellent in the oxygen barrier property. Among melt-extrudable thermoplastic resins which are now available, a saponified ethylene/vinyl acetate copolymer (ethylene/vinyl alcohol copolymer) is most excellent in the oxygen barrier property. However, this saponified copolymer is inferior in the moisture resistance, that is, the steam barrier property, and in this saponified copolymer, the oxygen permeability constant tends to increase as increase of the humidity. Accordingly, when this saponified copolymer is actually used for formation of plastic bottles, it is necessary to adopt a troublesome molding method in which this saponified copolymer is sandwiched by moisture-resistant resins such as polyolefins and the resulting laminate is fed to the molding step.

Another problem involved in plastic bottles is that the above-mentioned polyolefins or ethylene-vinyl alcohol copolymers have a very high ultraviolet ray permeability and even in case of a vessel composed of the above-mentioned laminate of ethylene-vinyl alcohol/polyolefin, permeation of ultraviolet rays is considerable.

Accordingly, packaged foods comprising the above-mentioned plastic vessel are defective in that coloring materials, oils and fats, animal proteins, beverage extracts and other components are deteriorated by ultraviolet rays permeating through the vessel wall to cause reduction of the flavor, appearance and sanitary characteristics, though the effect of preventing rancidity of the contents is satisfactory to some extent. As the conventional means for intercepting ultraviolet rays, there can be mentioned a method in which an ultraviolet absorber is incorporated in a resin constituting the plastic vessel. This method involves a problem in connection with the sanitary characteristics of the vessel and the ultraviolet ray-intersecting effect is still insufficient.

Furthermore, a plastic vessel is inferior to a glass vessel in the transparency and see-through characteristics. Especially, a polyolefin resin layer in a plastic vessel gives an opaque feeling to a transparent content when it is seen through the vessel wall and also gives a dirty turbid feeling to a colored content when it is seen through the vessel wall (see, for example Japanese Patent Application Laid-Open Specification No. 116387/77 & AU—A—508871).

Polyolefin resins are often used as inner face layers of plastic vessels. However, these polyolefin layers are defective in that since they have a property of adsorbing various low-molecular-weight substances, they absorb coloring materials, perfumes, vitamins and beverage extracts to reduce flavors of contents or they release smell components or monomer components adsorbed during the manufacture of vessels into contents to reduce flavors of contents.

Summary of the invention

It is therefore a primary object of the present invention to provide a plastic vessel which has an ultraviolet ray barrier property and a gas barrier property and which can preserve food for a long time without deterioration.

Another object of the present invention to provide a plastic vessel which is highly improved in not only the above-mentioned characteristics but also the transparency and see-through property.

Still another object of the present invention is to provide a plastic vessel having the above-mentioned characteristics, in which adsorption by a polyolefin inner face layer is prevented.

A further object of the present invention is to provide a plastic composite vessel comprising a layer composed mainly of an ethylene-vinyl alcohol copolymer and a coating layer of a vinylidene chloride type

copolymer, which are arranged contiguously to each other, which vessel has an oxygen permeation constant smaller than those of said two layers.

More specifically, in accordance with the present invention, there is provided a plastic vessel excellent in the storability, which comprises a plastic vessel substrate provided with a resin layer comprising at least 50 weight percent of an ethylene-vinyl alcohol copolymer, and a coating layer formed on at least one surface of the plastic vessel substrate, said coating layer being composed mainly of a copolymer comprising (a) 99 to 70% by weight of vinylidene chloride, (b) 1 to 30% by weight of at least one acrylic or methacrylic monomer and (c) optionally up to 100 parts by weight of at least one other ethylenically unsaturated monomer per 100 parts by weight of the total amount of (a) and (b), said copolymer having an oxygen permeability constant of less than $9\times10^{-14}cm^3 \cdot cm/cm^2 \cdot s \cdot cmHg$ as measured at a temperature of 20°C and a relative humidity of 100% and a water vapor permeability constant of less than $3\times10^{-3}$ $g \cdot cm/m^2 \cdot$ day as determined according to the method of JIS Z-0208.

In accordance with one preferred embodiment of the present invention, there is provided a plastic vessel having an improved oxygen barrier property, which comprises a plastic vessel substrate, at least one surface of which is formed of a resin consisting of or comprising an ethylene-vinyl alcohol (EVA) copolymer, wherein a vinylidene chloride type resin coating layer is formed contiguously to said EVA resin surface, said coating layer being composed mainly of a copolymer comprising (a) 99 to 70% by weight of vinylidene chloride, (b) 1 to 30% by weight of at least one acrylic or methacrylic monomer and (c) optionally up to 100 parts by weight of at least one other ethylenically unsaturated monomer per 100 parts by weight of the total amount of (a) and (b), said copolymer having an oxygen permeability constant of less than $9\times10^{-14}$ $cm^3 \cdot cm/cm^2 \cdot sec \cdot cmHg$ as measured at a temperature of 20°C and a relative humidity of 100% and a water vapor permeability constant of less than $3\times10^{-3}$ $g \cdot cm/m^2 \cdot$ day as determined according to the method of JIS Z-0208.

## Brief description of the drawings

Fig. 1 is a partially sectional side view showing an example of a coated plastic vessel in the form of a bottle.

Figs. 2-A through 2-H are enlarged sectional views showing examples of the sectional structure of the vessel shown in Fig. 1.

Fig. 3 is a graph illustrating the wavelength and the percent transmission in a plastic vessel, in which curve A shows the percent transmission of a vessel wall composed of polyolefin/ethylene-vinyl alcohol copolymer, curve B shows the percent transmission of a product obtained by forming a coating of a vinylidene chloride/acrylic or methacrylic monomer copolymer on the vessel wall shown in curve A, and curves C and D show the percent transmissions observed when the vessel wall of curve B is exposed to ultraviolet rays.

Fig. 4 is a graph illustrating the relation between the ratio of the thickness ($t_{CA}$) of a vinylidene chloride type resin layer to the total thickness ($t_{CA}+t_{EV}$) of a resin layer composed mainly of an ethylene-vinyl alcohol copolymer and the vinylidene chloride type resin layer and the oxygen permeability (determined at a temperature of 27°C, a relative humidity in the vessel of 0% and a relative humidity outside the vessel of 15% on the assumption that the total thickness, $t_{CA}+t_{EV}$, is 15 µm), in which curve A shows the actually measured values and curve B shows the harmonic means theoretical values.

Fig. 5 is a graph illustrating the relation between the ratio $t_{CA}/(t_{CA}+t_{EV})$ and the oxygen permeability under a high humidity condition (determined at a temperature of 27°C, a relative humidity in the vessel of 100% and a relative humidity outside the vessel of 93% on the assumption that the total thickness, $t_{CA}+t_{EV}$, is 15 µm), in which curve A′ shows the actually measured values and curve B′ shows the harmonic mean theoretical values.

## Detailed description of the preferred embodiments

Referring to Fig. 1 illustrating an embodiment of the plastic vessel of the present invention in the form of a bottle, this bottle 1 comprises a peripheral wall 2 having a circular or ellipsoidal section, a mouth portion 3 connected integrally to the peripheral wall 2 and a bottom portion 4 connected to the lower end of the peripheral wall 2. All of these bottle walls comprise a plastic vessel substrate 6 provided with a layer 5 of a resin composed mainly of an ethylene-vinyl alcohol copolymer and a coating layer 7 composed mainly of a vinylidene chloride-acrylic or methacrylic monomer copolymer, which is formed on at least one surface of the plastic vessel substrate 6, as shown in enlarged sectional views of Figs. 2-A through 2-H.

For example, as shown in Fig. 2-A, the plastic vessel substrate 6 comprises a single layer 5 of a resin composed mainly of an ethylene-vinyl alcohol copolymer and a coating layer 7 of a vinylidene chloride-acrylic or methacrylic monomer copolymer formed on one surface, i.e., the inner surface, or both the surfaces, as shown in Fig. 2-B, of the layer 5.

The plastic vessel substrate may be a laminate of a resin composed mainly of an ethylene-vinyl alcohol copolymer and other resin. For example, as shown in Fig. 2-C, the vessel substrate 6 may comprise a layer 5 of a resin composed mainly of an ethylene-vinyl alcohol copolymer (hereinafter referred to as "ethylene-vinyl alcohol copolymer resin") and a layer 8 of other resin, especially a moisture-resistant thermoplastic resin such as a polyolefin resin. Furthermore, as shown in Fig. 2-D, the vessel substrate 6 may comprise two ethylene-vinyl alcohol copolymer resin layers 5 and 5′ and a moisture-resistant

thermoplastic resin layer 8. In each of the embodiments illustrated in Figs. 2-A through 2-D, the vinylidene chloride-acrylic or methacrylic monomer copolymer layer is formed contiguously to the ethylene-vinyl alcohol copolymer resin layer 5, that is, in the form of one surface layer 7 in Fig. 2-A, two surface layers 7 and 7′ in Fig. 2-B or innermost and outermost layers 7 and 7′. In the embodiment shown in Fig. 2-D, the vessel substrate 6 comprises ethylene-vinyl alcohol copolymer resin inner and outer layers 5 and 5′ and an intermediate layer 8 of other thermoplastic resin, and vinylidene chloride-acrylic or methacrylic monomer copolymer layers 7 and 7′ are formed on the inner and outer layers 5 and 5′ respectively.

In embodiments shown in Figs. 2-E and 2H, the vessel substrate 6 comprises an ethylene-vinyl alcohol copolymer resin layer 5 and a layer 8 of a melt-moldable moisture-resistant thermoplastic resin such as an olefin resin, and vinylidene chloride-acrylic or methacrylic monomer copolymer layers 7 and 7′ are formed on the layer 5 and olefin resin layer 8, respectively. In a preferred example of this type, the vessel substrate 6 comprises an ethylene-vinyl alcohol copolymer resin layer 5 and a moisture-resistant thermoplastic resin layer 8, and vinylidene chloride-acrylic or methacrylic monomer copolymer layers 7 and 7′ are formed on both the surfaces of the vessel substrate 6 (see Fig. 2-H).

It is one of important features of the present invention that the present invention is based on the novel finding that the vinylidene chloride-acrylic or methacrylic monomer copolymer described in detail hereinafter has an excellent adhesion to a plastic vessel substrate of the above-mentioned type and the ultraviolet ray barrier property of the vessel wall as a whole can prominently be improved by such simple means as formation of a coating layer of said copolymer on the vessel substrate.

From Fig. 3, it will readily be understood that the vessel wall of the present invention has an excellent ultraviolet ray barrier property. Curve A in Fig. 3 illustrates the relation between the wavelength and the percent transmission in a plastic vessel substrate 6 composed solely of polyolefin/ethylene-vinyl alcohol copolymer. From curve A, it is seen that this plastic vessel has a considerably high percent transmission to ultraviolet rays having a wavelength of 210 to 400 nm as well as visible rays. Curve B is a wavelength-percent transmission curve of a product obtained by forming a coating of a vinylidene chloride-acrylic or methacrylic monomer copolymer resin having a thickness of 30 μm on the above plastic vessel substrate 6. From curve B, it is seen that a good ultraviolet ray barrier property can be obtained by such simple means as formation of the above-mentioned coating having a thickness of 30 μm.

In the coated plastic vessel of the present invention, this ultraviolet ray barrier property is durable. This is one of unexpected advantages attained by the present invention. Curves C and D are wavelength-percent transmission curves obtained when the coated plastic vessel of curve B is exposed to ultraviolet rays at 60°C for 25 hours and 50 hours, respectively, by using a weather-ometer. From curves C and D, it is seen that as the coated plastic vessel of the present invention is irradiated with ultraviolet rays, the ultraviolet ray permeability is controlled to a lower level and the absorption wavelength range is shifted to a longer wavelength side. Namely, in the coated plastic vessel of the present invention, the more exposed to ultraviolet rays, the lower becomes the ultraviolet ray permeability. Namely, even if the coated plastic vessel of the present invention is exposed to ultraviolet rays for a long time, the transmission of ultraviolet rays can be controlled at a very low level. It is believed that the reason is that on irradiation with ultraviolet rays, conjugated diene bonds are formed in the vinylidene chloride-acrylic or methacrylic monomer copolymer layer and these conjugated diene bonds exert a function of absorbing ultraviolet rays.

Another prominant advantage of the present invention is that this ultraviolet ray-intersecting effect can be attained while improving the oxygen barrier property and moisture resistance of the vessel wall as a whole and reducing the moisture dependency of the oxygen barrier property. When an ultraviolet absorbent or the like is incorporated in the resin in an amount necessary for attaining the same ultraviolet ray-intersecting effect as attainable in the present invention, the gas barrier property of the resin layer should naturally be reduced because of the presence of the incorporated ultraviolet absorbent. The vinylidene chloride-acrylic or methacrylic monomer copolymer used in the present invention is characterized in that it is prominently excellent in the oxygen barrier property and moisture resistance and the moisture dependency of the oxygen barrier property is very low. More specifically, this copolymer has an oxygen permeation constant of less than $9\times10^{-14}$ $cm^3\cdot cm/cm^2\cdot s\cdot cmHg$ as determined at a temperature of 20°C and a relative humidity of 100% and a water vapor permeation constant of less than $3\times10^{-3}$ $g\cdot cm/m^2\cdot day$ as determined according to the method of JIS Z-0208. This vinylidene chloride-acrylic or methacrylic monomer copolymer is coated so that the coating layer is piled on the multi-layer plastic vessel substrate in the gas permeation direction. In the present invention, by this laminating effect, the gas barrier property can further be improved.

In the coated plastic vessel of the present invention, the following additional advantages can be attained in addition to the foregoing characteristic advantages. A coating solution of the vinylidene chloride-acrylic or methacrylic monomer copolymer is excellent in the wetting property and adhesion to the surface of the above-mentioned plastic vessel substrate and it can form a dense and smooth film on the substrate. Accordingly, if a coating of the above copolymer is formed on the outer surface of the substrate, opacifying or blackening of the content is not caused when the content is seen through this coating, and the transparency and see-through characteristics of the vessel can remarkably be improved.

Furthermore, the low-molecular-weight substance-absorbing property of the vinylidene chloride-acrylic or methacrylic monomer copolymer is much lower than those of polyolefin resins. Accordingly, if a coating of this copolymer is formed on the inner surface of the vessel substrate, the adsorption by the

polyolefin or the like and release of adsorbed components from the polyolefin or the like can be prevented, and the property of retaining the flavor of the content can prominently be improved.

When the ethylene-vinyl alcohol copolymer resin layer and the vinylidene chloride-acrylic or methacrylic monomer copolymer are formed contiguously to each other according to the preferred embodiment of the present invention, the oxygen permeability of the resulting laminate is lower than those of layers of the respective copolymer layers, if the comparison is made based on the same thickness. This is still another unexpected advantage attained by the present invention.

Fig. 4 illustrates the relation between the ratio $t_{CA}/(t_{CA}+t_{EV})$ and the oxygen permeability as determined at a temperature of 27°C and a relative humidity of 0 or 15% in the plastic vessel obtained in Example 6 given hereinafter. In Fig. 4, $t_{CA}$ represents the thickness of the vinylidene chloride-acrylic or methacrylic monomer copolymer, $t_{EV}$ represents the thickness of the ethylene-vinyl alcohol copolymer resin layer and $(t_{CA}+t_{EV})$ represents the total thickness, which is adjusted to 15 μ.

From Fig. 4, it is seen that the oxygen permeability of the coated plastic vessel of the present invention indicated by curve A is much lower than the harmonic mean value of both the resin layers indicated by curve B, and to a great surprise, it is seen that within a considerable broad range of $t_{CA}/(t_{CA}+t_{EV})$, the oxygen permeability of the coated plastic vessel is lower than the oxygen permeability of the ethylene-vinyl alcohol copolymer resin layer which has a lower oxygen permeability between the two layers.

Fig. 5 illustrates the relation between the ratio $t_{CA}/(t_{CA}+t_{EV})$ in which $(t_{CA}+t_{EV})$ is adjusted to 15 μ and the oxygen permeability as determined at a temperature of 27°C and a relative humidity of 100% or 97%. As pointed out hereinbefore, the ethylene-vinyl alcohol copolymer resin has a high oxygen permeability under a high relative humidity condition. Even under a high humidity condition, the coated plastic vessel of the present invention has an oxygen permeability which, as indicated by broken line curve A', is much lower than the harmonic mean value of both the resin layers which is indicated by curve B', and within a certain range of $t_{CA}(t_{CA}+t_{EV})$, the oxygen permeability of the coated plastic vessel is lower than that of the vinylidene chloride-acrylic or methacrylic monomer copolymer which has a lower oxygen permeability between the two resins if the comparison is made based on the same thickness.

Since the results shown in Figs. 4 and 5 are those obtained when the entire thickness is kept constant, i.e., 15 μm, the oxygen permeability in Figs. 4 and 5 may be considered to be an oxygen permeation constant in which the thickness factor is eliminated.

For example, according to "Polymer and Water", page 287, published on September 1, 1972, the oxygen permeability of a laminate is ordinarily expressed by the harmonic mean value of the oxygen permeabilities of the respective layers (see formula 7.16 on page 287). Therefore, it will readily be understood that prominent reduction of the oxygen permeability in the coated plastic vessel of the present invention is not attained by lamination of the resin layers but by some physical or chemical mutual action of both the resins.

According to the present invention, as is apparent from the foregoing description, the oxygen permeability of the vessel wall can prominently be reduced, and especially when a thin coating of the vinylidene chloride-acrylic or methacrylic monomer copolymer is formed on the surface of the ethylene-vinyl alcohol copolymer resin layer; the moisture dependency of the oxygen permeability can be reduced.

In the present invention, it is preferred that both the resin layers be formed so that the requirement of

$$0.95 \geqq t_{CA}/(t_{CA}+t_{EV}) \geqq 0.005,$$

especially

$$0.75 \geqq t_{CA}(t_{CA}+t_{EV}) \geqq 0.008,$$

and the requirement of $t_{CA} \geqq 0.5$ μm, especially $t_{CA} \geqq 1.0$ μm, are satisfied.

It is generally preferred that the requirement of $t_{EV} \geqq 3.0$ μm, especially $t_{EV} \geqq 5.0$ μ, be satisfied, though the preferred thickness $t_{EV}$ of the ethylene-vinyl alcohol copolymer resin layer varies to some extent according to the ethylene content or the degree of saponification.

The copolymer that is used as the coating layer in the present invention comprises as indispensable components 99 to 70% by weight, preferably 96 to 75% by weight, of vinylidene chloride and 1 to 30% by weight, preferably 4 to 25% by weight of at least one acrylic or methacrylic monomer, and as an optional component, other ethylenically unsaturated monomer in an amount of up to 100 parts by weight per 100 parts by weight of the total amount of said two indispensable monomers.

Acrylic acid, methacrylic acid or derivatives thereof may be used as the acrylic or methacrylic monomer in the present invention. As preferred monomers, there can be mentioned monomers represented by the following formula:

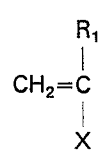

wherein $R_1$ stands for a hydrogen atom, a halogen atom or a methyl group, and X stands for a nitrile group (—C≡N) or a group

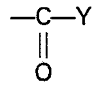

in which Y stands for an amino group, a hydroxyl group, alkyloxy group, a cycloalkyloxy group, an aminoalkyloxy group, a hydroxyalkyloxy group, an alkoxyalkyloxy group, a haloalkyloxy group, a glycidyl group, an aryloxy group or an aralkyloxy group.

More specifically, there can be mentioned acrylic acid, acrylonitrile, acrylamide, methyl acrylate, ethyl acrylate, methyl α-chloroacrylate, propyl acrylate, butyl acrylate, hexyl acrylate, octyl acrylate, cyclohexyl acrylate, glycidyl acrylate, 2-hydroxyethyl acrylate, acrylic monoglyceride, phenyl acrylate, methacrylic acid, methacrylonitrile, methacrylamide, methyl methacrylate, amyl methacrylate, glycidyl methacrylate, methacrylic monoglyceride, 2-hydroxypropyl methacrylate, β-methoxyethyl methacrylate, β-aminoethyl methacrylate and γ-N,N-diethylaminopropyl methacrylate.

These acrylic and methacrylic monomers may be used singly or in the form of a mixture of two or more of them. As the acrylic or methacrylic monomer that is especially suitable for attaining the objects of the present invention, there can be mentioned (i) a nitrile monomer such as acrylonitrile, methacrylonitrile or α-chloroacrylonitrile, (ii) an ester monomer such as methyl acrylate, ethyl acrylate, methyl methacrylate, 2-hydroxyethyl methacrylate, glycidyl acrylate, glycidyl methacrylate, acrylic monoglyceride, methacrylic monoglyceride, methoxyethyl acrylate of methoxyethylmethyl methacrylate, and (iii) a mixture of the monomers (i) and (ii).

As the ethylenically unsaturated monomer other than vinylidene chloride and the acrylic or methacrylic monomer, there can be mentioned, for example, vinyl aromatic monomers such as styrene and vinyl toluene, vinyl esters such as vinyl acetate and vinyl propionate, diolefins such as butadiene and isoprene, and methylvinyl ether, glycidylallyl ether, vinyl chloride, trichloroethylene, tetrachloroethylene, vinyl fluoride, difluoroethylene, trifluoroethylene tetrafluoroethylene, maleic anhydride, fumaric acid, vinyl succinimide and vinyl pyrrolidone. These monomers may be used singly or in the form of a mixture of two or more of them.

Preferred copolymers are described below though copolymers that can be used in the present invention are not limited to those exemplified below.

Vinylidene chloride/acrylonitrile copolymer, vinylidene chloride/acrylonitrile/methacrylonitrile copolymer, vinylidene chloride/methacrylonitrile copolymer, vinylidene chloride/acrylonitrile/glycidyl acrylate copolymer, vinylidene chloride/acrylonitrile/glycidyl methacrylate copolymer, vinylidene chloride/acrylonitrile/acrylic monoglyceride copolymer, vinylidene chloride/ethyl acrylate/glycidyl acrylate copolymer, vinylidene chloride/methyl methacrylate/styrene copolymer, vinylidene chloride/acrylonitrile/styrene copolymer, vinylidene chloride/acrylonitrile/trichloroethylene copolymer, vinylidene chloride/acrylonitrile/vinyl chloride copolymer, vinylidene chloride/acrylonitrile/methacrylic monoglyceride/trichloroethylene copolymer, and vinylidene chloride/methoxyethyl acrylate/methyl acrylate/trichloroethylene copolymer.

From the viewpoint of the ultraviolet ray barrier property or the gas barrier property, it is important that the copolymer that is used in the present invention should comprise at least 70% by weight of vinylidene chloride units. In order to effect coating of the copolymer to a plastic vessel without reduction of the gas barrier property or moisture resistance, it is important that the copolymer should comprise at least 1% by weight of the acrylic or methacrylic monomer.

In order to improve the adhesion of the copolymer to various plastic bottle substrates, it is preferred that a monomer represented by the following formula:

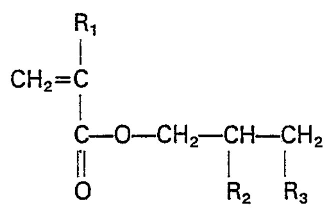

wherein $R_1$ is as defined above and $R_2$ and $R_3$ each stand for a hydroxyl group and these two hydroxyl groups may be dehydrated to form an oxirane ring, be used in an amount of 0.5 to 15% by weight based on the whole monomers.

In order to further improve the coating property of the copolymer to a laminated plastic bottle, the copolymer that is used in the present invention may comprise up to 100 parts by weight of other ethylenically unsaturated monomer per 100 parts by weight of the total amount of vinylidene chloride and the acrylic or methacrylic monomer.

The copolymer that is used in the present invention can easily be prepared by emulsifying or

suspending the constituent monomers in an aqueous medium by emulsifiers or dispersants and carrying out emulsion polymerization or suspension polymerization in the presence of a radical initiator. As the radical initiator, there may be used known peroxides, azo compounds or redox catalysts.

The molecular weight of the copolymer that is used in the present invention is not particularly critical, so far as it has a film-forming molecular weight. The copolymer that is used in the present invention is ordinarily difficult to mold by heating and melting, and therefore, the copolymer of the present invention is used for coating a plastic vessel substrate in the form of an organic solvent solution or an aqueous emulsion or latex according to methods described hereinafter.

As the ethylene-vinyl alcohol copolymer present in the vessel substrate layer, there is preferably used a saponified ethylene-vinyl acetate copolymer having an ethylene content of 20 to 80 mole %, especially 25 to 60 mole %, and a saponification degree of at least 90%, especially at least 95%. Other resins such as an olefin type resin or a polyamide may be blended in the ethylene-vinyl alcohol copolymer so far as the gas barrier property is not degraded, that is, in an amount of up to 50% by weight.

As the moisture-resistant thermoplastic resin that is used in combination with the ethylene-vinyl alcohol copolymer, there may be used thermoplastic resins having a water vapor permeation constant of less than $5\times10^{-1}$ $g\cdot cm/m^2\cdot day$ (JIS Z-0208), especially olefin polymers such as low-density, medium-density and high-density polyethylenes, polypropylene, ethylene-propylene copolymers, ethylene-butene copolymers, ionomers, ethylene-vinyl acetate copolymers and ethylene-acrylic acid ester copolymers, polyesters such as polyethylene terephthalate, polybutylene terephthalate and polyethylene terephthalate/isophthalate, polyamides such as nylon 6, nylon 6-6 and nylon 6-10, styrene type polymers such as polystyrene, styrene-butadiene block copolymers, styrene-acrylonitrile copolymers and styrene-butadiene-acrylonitrile copolymers (ABS resins), acrylic copolymers such as polymethyl methacrylate and methyl methacrylate-ethyl acrylate copolymers, and polycarbonates. These thermoplastic resins may be used singly or in the form of a blend of two or more of them.

From the economical viewpoint and in view of the moldability, a polyolefin such as polyethylene or polypropylene is preferred as the moisture-resistant thermoplastic resin.

In the case where there is no adhesion between the moisture-resistant thermoplastic resin layer and the ethylene-vinyl alcohol copolymer layer, a known adhesive layer may be interposed between the two layers. As the resin for this adhesive layer, there can be mentioned, for example, olefin resins modified with ethylenically unsaturated carboxylic acids and anhydrides thereof such as acrylic acid, maleic acid and maleic anhydride. Instead of this method using an adhesive layer, there may be adopted a method in which, as taught in Japanese Patent Publication No. 11263/77, a carbonyl group-containing thermoplastic polymer is incorporated in at least one of the moisture-resistant resin layer and the ethylene-vinyl alcohol copolymer layer, whereby the adhesiveness between the two layers can be improved.

This plastic bottle substrate may be prepared according to a known molding method such as blow-molding, biaxial drawing blow molding or injection molding.

Molding of a bottle can easily be accomplished by the blow-molding method comprising melt-extruding one or more of the above-mentioned thermoplastic resins in the form of a parison, supporting the extruded parison in a split mold and blowing a fluid into the parison. In order to obtain a bottle having improved impact resistance and transparency, there may be adopted a method comprising preparing a parison or preform by melt extrusion or injection molding, mechanically drawing the parison or preform in the axial direction at a temperature lower than the melting point and simultaneously drawing the parison or preform in the circumferential direction by blowing a fluid to form a plastic bottle molecularly oriented biaxially.

The plastic vessel substrate that is used in the present invention may be in the form of a cup or wide-mouthed bottle. This cup or wide-mouthed bottle may be formed by subjecting a single-layer film or a laminate formed by extrusion of a single layer, or a multi-layer film or sheet formed by co-extrusion, dry lamination or sandwich lamination to a known molding method such as vacuum molding, air pressure forming, plug-assist vacuum forming, ironing, expansion molding, rear extrusion molding or press molding. When a single-layer or multi-layer film or sheet is subjected to air pressure forming or plug-assist vacuum forming at a temperature capable of drawing the constituant resin, monoaxial or biaxial molecular orientation can be given to the resulting plastic vessel substrate.

The plastic vessel substrate that is used in the present invention may be a squeezable tubular vessel. This tubular vessel may be prepared, for example, according to the method disclosed in Japanese Patent Application Laid-Open Specification No. 5311/80 (& DE—A—2922556) in which a thin single-layer or multi-layer plastic bottle provided with a screwed mouth is formed by blow molding, the bottom portion of the bottle is cut off and the top end portion of the barrel wall is fusion-bonded.

The thickness of the plastic vessel substrate can be changed within a broad range from a relatively small thickness for a squeezable tube to a relatively large thickness for a rigid container. However, it is ordinarily preferred that the thickness of the vessel substrate be 0.05 to 2.5 mm, especially 0.1 to 1.5 mm. In case of the multi-layer vessel substrate, it is preferred that the thickness ratio between the moisture-resistant layer and the ethylene-vinyl alcohol copolymer layer be in the range of from 1/10 to 200/1, especially from 1/2 to 150/1.

The present invention is especially valuable for interception of ultraviolet rays in a plastic vessel for which a high transparency is required.

The coated plastic vessel of the present invention is formed by coating at least one surface of the so-prepared plastic vessel substrate with an aqueous latex or organic solvent solution of the above-mentioned copolymer and drying the so formed coating.

An aqueous latex of the vinylidene chloride copolymer having a solid concentration of 10 to 65% and a viscosity of 3 to 500 mPa · s (centipoises) is preferably used in the present invention.

A solution having a solid content of 5 to 60% in an organic solvent such as tetrahydrofuran, ethyl acetate, methylethyl ketone, cyclohexane, dimethylformamide, dimethylsulfoxide, dioxane or a mixed solvent thereof is used.

Coating of the plastic vessel substrate with the above-mentioned copolymer latex or solution may be accomplished by adopting at least one of known coating methods such as dip coating, spray coating, brush coating, roller coating, electrostatic coating, centrifugal coating, cast coating and electrophoretic coating methods. The coating operation may be conducted only once or a multiple stage coating method may be adopted. If desired, the plastic vessel substrate may be subjected to a wetting property-improving preliminary treatment such as a flame treatment, a pretreatment with an anchoring agent, a corona discharge treatment, a surface active agent coating treatment or a chemical etching treatment. Furthermore, in order to impart an electric conductivity, the plastic vessel substrate may be subjected to a conducting treatment.

The conditions adopted for drying the coated copolymer layer are changed according to the thickness of the coating layer, but ordinarily, a sufficient drying effect can be attained when drying is carried out at a temperature of 40 to 160°C for about 2 seconds to about 60 minutes.

The effect of shutting a gas or perfume can be attained sufficiently by the above-mentioned drying operation alone, but the effect is further enhanced if an aging treatment (heat treatment) is carried out at a temperature of 30 to 120°C for 30 seconds to 7 days after the drying operation, if desired.

In the present invention, satisfactory results can ordinarily be obtained if the copolymer is formed in a layer having a thickness of 0.5 to 50 µm, especially 1 to 40 µm.

According to another embodiment of the process for the preparation of plastic bottles of the present invention, a parison, preformed product, sheet or film of a thermoplastic resin to be formed into a plastic vessel substrate is coated with a latex or organic solvent solution of the above-mentioned copolymer and then dried to form a coating layer, and the coated structure is subjected to the above-mentioned molding operation to obtain a coated plastic vessel. The coating layer of the above-mentioned copolymer used in the present invention can resist such processing and is advantageous in that the adhesion to the substrate is not lost by such processing.

In the formation of the coating layer, known additives may be incorporated into the copolymer if desired.

For example, at least one member selected from reinforcers, fillers, plasticizers, thermal stabilizers, antioxidants, ultraviolet absorbers, viscosity increasers, viscosity depressants, blocking preventing agents, lubricants, leveling agents and colorants may be incorporated into the copolymer according to the known recipes.

Of course, if desired, one or more of pigments, antioxidants, antistatic agents, ultraviolet absorbers and lubricants may be incorporated into the moisture-resistant thermoplastic resin in a total amount of 0.001 to 5.0 parts by weight per 100 parts by weight of the resin.

For example, in order to reinforce the plastic vessel, there may be incorporated a fibrous reinforcer such as glass fiber, aromatic polyamide fiber, carbon fiber, pulp or cotton linter, a powdery reinforcer such as carbon black or white carbon or a flaky reinforcer such as glass flake or aluminum flake in an amount of 2 to 150 parts by weight per 100 parts by weight of the thermoplastic resin. Furthermore, in order to obtain a bulking effect, heavy or soft calcium carbonate, gypsum, clay, magnesium sulfate, alumina powder, silica powder or magnesium carbonate may be incorporated in an amount of 5 to 150 parts by weight per 100 parts by weight of the thermoplastic resin.

By virtue of the foregoing advantages, the coated plastic vessel of the present invention is very valuable as a light-weight plastic vessel for preserving liquid foods, pasty foods, seasonings, drinks, medicines, cosmetics and agricultural chemicals.

The present invention will now be described in detail with reference to the following Examples that by no means limit the scope of the present invention.

In each of these Examples, the ultraviolet ray percent transmission (UVT), the oxygen permeability ($QO_2$), the flavor-retaining property (FLR) and the see-through characteristic (doc) were determined according to the following methods.

(1) Ultraviolet ray percent transmission (UVT):

The barrel or bottom portion of the sample vessel was cut into a predetermined size and the percent transmission was determined as described above with reference to Fig. 3 over the wavelength region of 210 to 700 nm by using a recording spectro-photometer (supplied by K. K. Hitachi Seisakusho). The ultraviolet ray percent transmission at 280 nm (indicated by the arrow in Fig. 3) was measured and the obtained value was expressed as UVT.

(2) Oxygen permeability under low humidity condition (0% RH/15% RH) ($QO_2$-D):

The inner atmosphere of the vessel to be measured was replaced by nitrogen in vacuum, and the mouth portion of the vessel was sealed by a rubber plug and the contact interfacial portion between the mouth and plug was covered with an epoxy type adhesive. The vessel was kept for a certain period in a thermostat chamber maintained at a temperature of 27°C and a relative humidity of 15% and the concentration of oxygen which had permeated into the vessel was determined according to the gas chromatography. Then, the oxygen permeability at a relative humidity in the vessel of 0% and a relative humidity outside the vessel of 15% (hereinafter referred to as "under the low humidity condition") and at a temperature of 27°C was calculated according to the following formula, and by utilizing the inverse proportional relationship between the thickness and the oxygen permeability, the oxygen gas permeability was converted to a value when the sum of the thickness $t_{CA}$ of the vinylidene chloride type resin coating and the thickness $t_{EV}$ of the ethylene-vinyl alcohol copolymer resin layer was 15 µm. Accordingly, the value ($QO_2$-D) means the value of the oxygen permeability when the value ($t_{CA}+t_{EV}$) is equal to 15 µm. The measurement was made on three samples and the average value was calculated and shown.

$$QO_2=\frac{m\times\frac{ct}{100}}{t\times Op\times A}(cm^3/m^2\cdot day\cdot atm)$$

wherein m stands for an amount (ml) of nitrogen gas filled in the vessel, t stands for the keeping period (days) in the thermostat chamber, ct stands for the oxygen concentration (% by volume) in the vessel after passage of t days, A stands for the effective surface area ($m^2$) of the vessel, and Op stands for the oxygen gas partial pressure (atm.) (=0.209).

(3) Oxygen permeability under high humidity condition (100% RH/93% RH) ($QO_2$-W):

The vessel to be measured was filled with 20 $cm^3$ of distilled water, and the atmosphere in the vessel was replaced by nitrogen in vacuum. The mouth portion of the vessel was sealed by a rubber plug and the contact interface portion between the mouth and rubber plug was covered with an epoxy type adhesive. The vessel was kept for a predetermined period in a thermostat chamber maintained at a temperature of 27°C and a relative humidity controlled to 93% by a saturated aqueous solution of potassium nitrate. The concentration of oxygen which had permeated into the vessel was determined by the gas chromatography, and the oxygen gas permeability at a relative humidity in the vessel of 100% and a relative humidity outside the vessel of 93% (hereinafter referred to as "under the high humidity condition") and at a temperature of 27°C was calculated according to the formula mentioned in the preceding paragraph (2). By utilizing the inverse proportional relationship between the thickness and the oxygen permeability, the oxygen gas permeability was converted to a value when the sum of the thickness $t_{CA}$ of the vinylidene chloride type resin coating and the thickness $t_{EV}$ of the ethylene-vinyl alcohol copolymer resin layer was 15 µm. Accordingly, the value ($QO_2$-W) means the value of the oxygen permeability when the value ($t_{CA}+t_{EV}$) is equal to 15 µm. The measurement was made on the three samples and the average value was calculated and shown.

(4) Flavor-retaining property (FLR):

The laminated vessel having a coating of the vinylidene chloride type resin formed on the inner surface or the inner and outer surfaces of a vessel substrate and the comparative uncoated vessel (vessel substrate per se) were filled with distilled water, and the mouth portions were sealed and the vessels were allowed to stand still at 50°C for 3 days.

Then, the stored distilled water was tasted by 24 panel-members, and the vessel containing distilled water having a better taste was indicated by each panel-member. Each of values shown in Tables given hereinafter indicates the number of panel-members judging that the designated vessel contained distilled water having a better taste.

(5) See-through characteristic (doc):

Two kinds of vessels to be compared, that is, the laminated vessel having a coating of the vinylidene chloride type resin formed on the outer surface or the inner and outer surfaces of a vessel substrate and the comparative uncoated vessel (vessel substrate per se), were shown in the empty state (non-filled state) to ten panelers. The two vessels were compared with each other visually. The vessel superior in the transparency and gloss was indicated.

A solution containing 1% by weight of Congo Red, a kind of a dye, in city water was filled in the above two vessels, and they were compared with each other by the sense of sight by the same panelers. The vessel having a better content see-through property (the opacity or different hue feeling is reduced) was indicated.

In this two-stage sight sense evaluation method, one point was given to the vessel indicated by one panel-member. In the case where there was no difference of the appearance or the content see-through

property between the two vessels, 0.5 point was given to each vessel. The total points of the two vessels were counted.

The see-through characteristic (doc) was calculated according to the following formula:

$$doc = \frac{(B-A)+(C-D)}{2N} = \frac{(B-A)+(C-D)}{2\times10}$$

wherein N represents the number of panel members (10 in this case), and A, B, C and D represent the total points of the respective vessels, which are shown in the following Referential Table (A+B=C+D=10).

Referential Table

| Vessels compared | Points of vessels Vessel I | Vessel II |
|---|---|---|
| empty vessels (not filled) | A (points) | B (points) |
| centent-filled vessels | C (points) | D (points) |

If the value of the see-through characteristic (doc) calculated according to the above formula is a positive value (plus), the vessel I is superior to the vessel II in the content see-through property and this effect is highest when the value doc is +1.0. On the other hand, if the value doc is a negative value (minus), the vessel I is inferior to the vessel II in the content see-through property. When the value of doc is zero, there is not any difference of the content see-through property between the vessels I and II.

Example 1

A 5-layer laminated bottle (inner capacity=500 cc) comprising inner and outer layers (melt-extrudable moisture-resistant thermoplastic resin layers 8 and 8′ in Figs. 2-A through 2-H) of isotactic polypropylene having a melt index of 1.4 g/10 min (ASTM D-1238), adhesive layers of maleic anhydride-modified polypropylene (Modic. P-40B) supplied by Mitsubishi Petrochemical Co.) and an intermediate layer of a saponified ethylene-vinyl acetate copolymer (ethylene-vinyl alcohol copolymer) having an ethylene content of 40 mole % and a saponification degree of 99% (inner or outer layer/adhesive layer/intermediate layer thickness ratio=50/0.5/1) was prepared according to the known biaxial draw-blow molding method.

The inner surface of the obtained bottle substrate was coated with a vinylidene chloride type resin latex comprising 100 parts by weight of a copolymer comprising 83% by weight of vinylidene chloride, 14% by weight of β-methoxyethyl methacrylate and 3% by weight of methyl acrylate and 40 parts by weight of trichloroethylene (dispersion medium=water, solid concentration=50% by weight) according to the known brush coating method, and the coating was dried at 70°C for 5 minutes in a perfect oven (explosion-proof type) and aged (heat-treated) at 48°C for 24 hours in a thermostat air tank to obtain a laminated bottle having a layer structure shown in Fig. 2-E. The thickness of the vinylidene chloride type resin coating formed on the inner surface of the obtained vessel was 25 μm. This laminated bottle is designated as "bottle A".

With respect to the obtained bottle A and the laminated bottle substrate not coated with the vinylidene chloride type resin (designated as "bottle nA") as a comparative bottle, the ultraviolet ray percent transmission (UVT) at a wavelength of 280 nm, the oxygen permeability ($QO_2$-D) and the flavor-retaining property (FLR) were determined according to the methods described hereinbefore to obtain results shown in Tables 1 and 2.

TABLE 1

| Sample | UVT (%) | $QO_2$-D ($cm^3/m^2 \cdot day \cdot atm$) |
|---|---|---|
| A | 60 | 1.9 |
| nA | 84 | 16.2 |

TABLE 2

| | Sample A | Sample nA |
|---|---|---|
| | FLR (number of panelers) | |
| better bottle indicated by panel-members | 24 | 0 |

From the results shown in Tables 1 and 2, it will readily be understood that by coating the vinylidene chloride type resin on the laminated bottle substrate, the barrier property to ultraviolet rays (UVT) and oxygen ($QO_2$-D) are improved and also the flavor-retaining property (FLR) is highly improved.

Example 2

A 3-layer laminated wide-mouthed up (inner capacity=1000 $cm^3$) comprising an outer layer (melt-extrudable moisture-resistant thermoplastic resin layer 8 or 8′ in Figs. 2-A through 2-H) of high-density polyethylene having a melt index of 0.3 g/10 min (ASTM D-1238), an adhesive layer of maleic anhydride-modified high-density polyethylene (H-31B supplied by Mitsubishi Petrochemical Co.) and an inner layer of a saponified ethylene-vinyl acetate copolymer (ethylene-vinyl alcohol copolymer) having an ethylene content of 30 mole % and a saponification degree of 99% (outer layer/adhesive layer/inner layer thickness ratio=5/0.5/1) was prepared according to the known vacuum forming method.

The outer surface of the obtained cup substrate was coated with a vinylidene chloride type resin latex comprising a copolymer comprising 95% by weight of vinylidene. chloride and 5% by weight of acrylonitrile (dispersion medium=water, solid concentration=30% by weight) according to the known dip coating method, and the coating was dried at 50°C for 55 minutes in a perfect oven (explosion-proof type) and aged (heat-treated) at 90°C for 3 minutes in a thermostat air tank to obtain a laminated cup having a layer structure shown in Fig. 2-G. The thickness of the vinylidene chloride type resin coating formed on the outer surface of the obtained vessel was 15 μm. This laminated cup is designated as "cup B".

With respect to the obtained cup B and the laminated cup substrate not coated with the vinylidene chloride type resin (designated as "cup nB") as a comparative cup, the ultraviolet ray percent transmission (UVT) at a wavelength of 280 nm, the oxygen permeability ($QO_2$-D) and the see-through property (doc) were determined according to the methods described hereinbefore to obtain results shown in Tables 3 and 4.

TABLE 3

| Sample | UVT (%) | $QO_2$-D ($cm^3/m^2 \cdot day \cdot atm$) |
|---|---|---|
| B | 41 | 3.7 |
| nB | 58 | 7.2 |

TABLE 4
Points of vessels

| Vessels compared | B:nB | doc |
|---|---|---|
| empty state | 5:5 | +0.50 |
| filled state | 10:0 | |

From the results shown in Tables 3 and 4, it will readily be understood that by coating the vinylidene chloride type resin on the laminated cup substrate, the barrier property to ultraviolet rays (UVT) and oxygen ($QO_2$-D) are improved and also the see-through property (doc) is highly improved.

Example 3

A 3-layer laminated tube (inner capacity=200 $cm^3$) comprising inner and outer layers (melt-extrudable moisture-resistant thermoplastic resin layers 8 and 8′ in Figs. 2-A through 2-H) of low-density polyethylene having a melt index of 0.4 g/10 min (ASTM D-1238) and a density of 0.92 $g/cm^3$ (ASTM D-1505) and an intermediate layer of a mixture comprising a saponified ethylene-vinyl acetate copolymer (ethylene-vinyl alcohol copolymer) having an ethylene content of 25 mole % and a saponification degree of 97%, the above low-density polyethylene and an ionomer (ion type: $Na^+$, melt index=1.5 g/10 min.) at a ratio of 70/20/10 (inner or outer layer/intermediate layer thickness ratio=1/1) was prepared according to the known co-extrusion hollow molding method.

The inner and outer surfaces of the obtained tube substrate was coated with the same vinylidene chloride type resin latex as described in Example 1 (dispersion medium=water, solid concentration=50% by weight) according to the known slush coating method and the known dip coating method, and the coating was dried at 60°C for 40 minutes in a perfect oven and aged (heat-treated) at 40°C for 5 days in a thermostat air tank to obtain a laminated tube having a layer structure shown in Fig. 2-E. The total thickness of the vinylidene chloride type resin coatings formed on the inner and outer surfaces of the obtained vessel was 30 μm. This laminated tube is designated as "tube C-1".

The tube C-1 was irradiated at 60°C for 50 hours by a sunshine-type weather-ometer supplied by Suga Shikenki K.K. (irradiation energy=$1.2\times10^7$ joules/$m^2$). This laminated tube is designated as "tube C-2").

With respect to the obtained tubes C-1 and C-2 and the laminated tube substrate not coated with the vinylidene chloride type resin (designated as "tube nC") as a comparative tube, the ultraviolet ray percent transmission (UVT) at a wavelength of 280 nm, the oxygen permeability ($QO_2$-D) and the flavor-retaining property (FLR) were determined according to the methods described hereinbefore to obtain results shown in Tables 5 and 6. Furthermore, the see-through properties (doc) of tubes C-2 and nC were determined to obtain results shown in Table 7.

TABLE 5

| Sample | UVT (%) | $QO_2$-D ($cc/m^2 \cdot day \cdot atm$) |
|---|---|---|
| C-1 | 58 | 1.1 |
| C-2 | 0 | 1.2 |
| nC | 81 | 6.5 |

TABLE 6

| Better tubes indicated | Sample C-1 | Sample C-2 | Sample nC |
|---|---|---|---|
| | FLR (numbers of panel-members) | | |
| nC/C-1 | 22 | — | 2 |
| nC/C-2 | — | 21 | 3 |
| C-1/C-2 | 14 | 12 | — |

TABLE 7
Points of vessels

| Vessels compared | C-2:nC | doc |
|---|---|---|
| empty state | 6:4 | +0.30 |
| filled state | 9:1 | |

From the results shown in Tables 5, 6 and 7, it will readily be understood that by coating the vinylidene chloride type resin on the laminated tube substrate, the barrier property to ultraviolet rays (UVT) and oxygen ($QO_2$-D) are improved and especially by the weather-ometer, the ultraviolet ray intercepting effect is improved, and also the flavor-retaining property (FLR) and see-through property are highly improved.

Each of the tubes C-1, C-2 and nC were filled with a commercially available soybean oil just after opening, and the mouth was sealed. The filled tubes were allowed to stand still at a temperature of 30°C and a relative humidity of 80% in a bright place (1000 luxes) for 3 months.

With respect to the soybean oil filled in each tube, the change ratio of the absorbance at 470 nm (absorbance after standing/absorbance just after opening) was determined by using a spectrophotometer.

The absorbance change ratio of the soybean oil filled in the tube C-1 was 0.91, that of the soybean oil filled in the tube C-2 was 0.99, and that of the soybean oil filled in the tube nC was 0.53. Accordingly, it was confirmed that the color fading ratio of the soybean oil in the laminated tube coated with the vinylidene chloride type resin is much lower than in the uncoated tube substrate (nC).

Example 4

A 3-layer laminated bottle comprising inner and outer layers (melt-extrudable moisture-resistant thermoplastic resin layers 8 and 8′ in Figs. 2-A through 2-H) of polyvinyl chloride having an average degree of polymerization of 850 and an intermediate layer of a saponified ethylene-vinyl acetate copolymer (ethylene-vinyl alcohol copolymer) having an ethylene content of 48 mole % and a saponification degree of 99% (intermediate layer/inner or outer layer thickness ratio=1/80) was prepared according to the known co-extrusion molding method).

The outer surface of the obtained bottle substrate was coated with a vinylidene chloride type resin latex comprising a copolymer comprising 70% by weight of vinylidene chloride, 10% by weight of methyl acrylate and 20% by weight of glycidyl acrylate (dispersion medium=water, solid concentration=64% by weight) according to the known spray coating method, and the coating was dried at 100°C for 10 seconds in a perfect oven and aged (heat-treated) at 100°C for 15 seconds in a thermostat air tank to obtain a laminated bottle having a layer structure shown in Fig. 2-E (inner capacity=300 $cm^3$). The thickness of the vinylidene chloride type resin coating formed on the outer surface of the obtained vessel was 18 μm. This laminated bottle is designated as "bottle D-1".

The bottle D-1 was irradiated under the same conditions as in Example 3 by using the same weather-ometer as used in Example 3. The irradiated laminated bottle is designated as "bottle D-2".

With respect to the obtained bottles D-1 and D-2 and the laminated bottle substrate not coated with the vinylidene chloride type resin (designated as "bottle nD") as a comparative bottle, the ultraviolet ray percent transmission (UVT) at a wavelength of 350 nm and the oxygen permeability ($QO_2$-D) were determined according to the methods described hereinbefore to obtain results shown in Table 8.

TABLE 8

| Sample | UVT (%) | $QO_2$-D ($cm^3/m^2 \cdot day \cdot atm$) |
|---|---|---|
| D-1 | 22 | 10.7 |
| D-2 | 0 | 10.6 |
| nD | 39 | 30.5 |

Each of these three laminated bottles was filled with city water and the mouth was sealed. The filled bottles were allowed to stand still at a temperature of 50°C and a relative humidity of 10% for 21 days.

With respect to each bottle, the weight of city water lost by 21 days' standing was determined by an even balance having a measurable limit of 10 mg and the water loss ratio was calculated according to the following formula:

$$\text{Water loss ratio} = 1 - \frac{\text{amount of water after standing}}{\text{amount of water just after filling}}$$

The water loss ratios in the bottles D-1 and D-2 were 0.0018 and 0.0017, respectively, while the water loss ratio in the laminated bottle substrate (nD) was much higher and was 0.025.

Example 5

A 2-layer laminated cup (inner capacity=280 $cm^3$) comprising an inner layer (melt-extrudable moisture-resistant thermoplastic resin layer 8 or 8' in Figs. 2-A through 2-H) of atactic polystyrene having a melt index of 3.2 g/10 min (ASTM D-1238) and an outer layer of a saponified ethylene-vinyl acetate copolymer (ethylene-vinyl alcohol copolymer) having an ethylene content of 35 mole % and a saponification degree of 96% (inner layer/outer layer thickness ratio=20/1) was prepared according to the known solid-phase pressure forming method.

The inner surface of the obtained cup substrate was coated with a vinylidene chloride type resin latex comprising 100 parts by weight of a copolymer comprising 80% by weight of vinylidene chloride, 10% by weight of methyl acrylate and 10% by weight of acrylic monoglyceride and 50 parts by weight of vinyl chloride (dispersion medium=water, solid concentration=22% by weight) according to the known slush coating method, and the coating was dried at 80°C for 2 minutes in a perfect oven. These coating and drying operations were repeated 3 times and the coating was aged (heat-treated) at 30°C for 7 days in a thermostat air tank to obtain a laminated cup having a layer structure shown in Fig. 2-G. The thickness of the vinylidene chloride type resin coating formed on the inner surface of the obtained vessel was 9.6 μm. This laminated cup is designated as "cup E".

With respect to the obtained cup E and the laminated cup substrate not coated with the vinylidene chloride type resin (designated as "cup nE") as a comparative bottle, the ultraviolet ray percent transmission (UVT) at a wavelength of 350 nm, the oxygen permeability ($QO_2$-D) and the flavor-retaining property (FLR) were determined according to the methods described hereinbefore to obtain results shown in Tables 9 and 10.

TABLE 9

| Sample | UVT (%) | $QO_2$-D ($cc/m^2 \cdot day \cdot atm$) |
|---|---|---|
| E | 17 | 5.2 |
| nE | 48 | 13.5 |

TABLE 10

| | Sample E | Sample nE |
|---|---|---|
| | FLR (number of panel-members) | |
| better bottle indicated by panel-member | 24 | 0 |

The cups E and nE were filled with commercially available tomato puree just after opening, and the mouth of each cup was sealed with a laminate film comprising an aluminum foil. The filled cups were allowed to stand still at a temperature of 30°C and a relative humidity of 80% in a bright place (1000 luxes).

Then, the a value of the tomato puree filled in each cup was measured by using a color difference meter, and the color fading ratio was calculated according to the following formula:

$$\text{Color fading ratio} = \frac{\text{a value after standing}}{\text{a value just after opening}}$$

The color fading ratio of the tomato puree filled in the cut E was 0.97, while the color fading ratio of the tomato puree filled in the cup nE was 0.70.

These tomato puree after standing were taken by 24 panel-members, and they were compared with each other in the flavor and taste. All of the 24 panel-members answered that the tomato puree filled in the cup E was better in the flavor and taste.

Example 6

A 3-layer laminated bottle (inner capacity=500 ml) comprising an inner layer (melt-extrudable moisture-resistant thermoplastic resin layer) of high-density polyethylene having a melt index of 0.3 g/10 min (ASTM D-1238) and a density of 0.95 g/cm$^3$ (ASTM D-1505, an adhesive layer of maleic anhydride-modified high-density polyethylene (H-31B supplied by Mitsubishi Petrochemical Co.) and an outer layer of a saponified ethylene-vinyl acetate copolymer (ethylene-vinyl alcohol copolymer) having an ethylene content of 30 mole % and a saponification degree of 99% (outer layer/adhesive layer/inner layer thickness ratio=1/0.5/20; the thickness of the ethylene-vinyl alcohol copolymer layer being 14.4 μm on the average) was prepared according to the known co-extrusion hollow molding method.

The outer surface of the obtained bottle substrate was coated with a vinylidene chloride type resin latex comprising 100 parts by weight of a copolymer comprising 83% by weight of vinylidene chloride, 14% by weight of methoxyethyl methacrylate and 3% by weight of methyl acrylate and 40 parts by weight of ethylene trichloride (dispersion medium=water, solid concentration=47% by weight) according to the known dip coating method, and the coating was dried at 70°C for 5 minutes in a perfect oven (air circulation type) and aged (heat-treated) at 80°C for 4 minutes in a thermostat air tank.

The above coating, drying and heat-treating operations were conducted 1 to 10 times.

Thus, the coated laminated bottles having a layer structure as shown in Fig. 2-C (the outer face was composed of the vinylidene chloride type resin and the inner surface was composed of the high-density polyethylene) were obtained. The average thicknesses (coating thickness) of the vinylidene chloride type resin coated on the outer surfaces of the bottles were 2.9 μm when the coating, drying and heat-treating operations were conducted once, 6.4 μm when these operations were conducted twice, 9.7 μm when these operations were conducted 3 times and 38.3 μm when these operations were conducted 10 times.

With respect to the obtained 4 coated bottles and the laminated bottle substrate not coated with the vinylidene chloride type resin as a comparative bottle, the ultraviolet ray percent transmission (UVT) at a wavelength of 280 nm and the oxygen permeability under high and low humidity conditions ($QO_2$-W and $QO_2$-D) were determined according to the methods described hereinbefore to obtain results shown in Table 11.

From the results shown in Table 11, it will readily be understood that the oxygen gas permeability of the ethylene-vinyl alcohol copolymer is improved by the presence of the vinylidene chloride type resin, the moisture dependency of the oxygen gas permeability of the ethylene-vinyl alcohol copolymer is drastically reduced, and that the ultraviolet ray percent transmission at 280 nm is reduced and the ultraviolet ray barrier effect is attained.

TABLE 11

| Coating thickness (μ) of vinylidene chloride type resin | 0 | 2.9 | 6.4 | 9.7 | 38.3 |
|---|---|---|---|---|---|
| $QO_2$-D [cm$^3$/m$^2$ · day · atm] | 0.49 | 0.30 | 0.33 | 0.39 | 0.73 |
| $QO_2$-W [cm$^3$/m$^2$ · day · atm] | 46.90 | 7.66 | 2.57 | 1.92 | 1.24 |
| UVT [%] | 80 | 72 | 64 | 58 | 48 |

The inner surface (the high-density polyethylene side) of the laminated bottle substrate was coated once with the above-mentioned vinylidene chloride type resin. The coating, drying and aging conditions were the same as described above. The average coating thickness of the vinylidene chloride type resin coated on the inner surface was 3.1 μm. Thus, a coated laminated bottle having a layer structure shown in Fig. 2-G was obtained.

With respect to the inner surface-coated laminated bottle, the oxygen permeability was determined under high and low humidity conditions. The value $QO_2$-D was 0.54 cm$^3$/m$^2$ · day · atm [as calculated on the assumption that the value ($t_{CA}+t_{EV}$) was 15 μm] and the value $QO_2$-W was 11.48 cc/m$^2$ · day · atm [as calculated on the assumption that the value ($t_{CA}+t_{EV}$) was 15 μm].

From the foregoing results and the results shown in Table 11, it is seen that a coated laminated bottle in which the vinylidene chloride type resin layer is contiguous to the ethylene-vinyl alcohol copolymer layer has smaller values $QO_2$-D and $QO_2$-W than those of a coated laminated bottle in which the polyethylene layer (inclusive of the adhesive layer) is interposed between the vinylidene chloride type resin layer and the ethylene-vinyl alcohol copolymer layer.

Example 7

A saponified ethylene-vinyl acetate copolymer (ethylene-vinyl alcohol copolymer) was molded into a

cylindrical cup having an inner diameter of 4 cm, a height of 11 cm and a wall thickness of 0.4 mm according to the known injection molding method.

Both inner and outer surfaces of the obtained cup substrate were coated with a vinylidene chloride type resin latex comprising a copolymer comprising 89% by weight of vinylidene chloride, 4% by weight of acrylonitrile and 2% by weight of methyl acrylate (dispersion medium=water, solid concentration=52% by weight) according to the known flow coating method, and the coating was dried at 80°C for 2 minutes in an oven (air circulation type). Then, the inner surface of the cup was coated with the same latex according to the known slush coating method and the coating was dried at 80°C for 3 minutes in the above oven.

Thus, the coated laminated cup having a layer structure shown in Fig. 2-B (the substrate was composed of the ethylene-vinyl alcohol copolymer and the inner and outer surfaces were composed of the vinylidene chloride type resin) was obtained. The average coating thickness of the vinylidene chloride type resin coated on the outer surface of the obtained cup was 10.7 μm, and the average coating thickness of the vinylidene chloride type resin coated on the inner surface of the cup was 7.4 μm (the total coating thickness was 18.1 μm).

The coated cup was irradiated at 60°C for 50 hours by a sunshine-type weather-ometer supplied by Suga Shikenki K.K. (irradiation energy=$1.2\times10^7$ joules/$m^2$).

With respect to the obtained coated and laminated cup and the laminated cup substrate not coated with the vinylidene chloride type resin as a comparative bottle, the ultraviolet ray percent transmission (UVT) at a wavelength of 280 nm and the oxygen permeability ($QO_2$-W) and ($QO_2$-D) under high and low humidity conditions were determined according to the methods described hereinbefore to obtain results shown in Table 12.

Each of these two cup (uncoated cup and coated cup) was filled with 135 $cm^3$ of city water and the mouth was sealed with a laminated film comprising an aluminum foil. The filled cups were allowed to stand still at a temperature of 50°C and a relative humidity of 10% for 21 days.

With respect to each cup, the weight of city water lost by 21 days' standing was determined by an even balance having a measurable limit of 500 mg and the water loss ratio was calculated according to the following

$$\text{Water ratio} = 1 - \frac{\text{amount of water after standing}}{\text{amount of water just after filling}}$$

The water loss ratio in the uncoated ethylene-vinyl alcohol copolymer cup was 0.84. In the ethylene-vinyl alcohol copolymer cup having the inner and outer surfaces coated with the vinylidene chloride type resin, the weight loss could not be measured within the measurable range of the balance.

TABLE 12

| Thickness (μ) of vinylidene chloride type resin coating | 0 | 18.1 μ* |
|---|---|---|
| $QO_2$-D [$cm^3/m^2 \cdot day \cdot atm$] | 2.11 | 0.90 |
| $QO_2$-W [$cm^3/m^2 \cdot day \cdot atm$] | 26.5 | 1.62 |
| UVT [%] | 87 | 0 |

Note
*: total thickness

Example 8

A square laminated cup (inner capacity=540 ml) having a 3-layer structure shown below was formed according to the known co-extrusion method and solid phase pressure forming method.

Outer layer: isotactic polypropylene having a melt index of 1.4 g/10 min and a density of 0.91 g/$cm^3$

Adhesive layer: maleic anhydride-modified polypropylene (P-40B supplied by Mitsubishi Petrochemical Co.)

Inner layer: ethylene-vinyl alcohol copolymer having an ethylene content of 25 mole % and a saponification degree of 99.6%.

The outer layer/adhesive layer/inner layer thickness ratio was 1/0.1/1, and the average thickness of the ethylene-vinyl alcohol copolymer layer (inner layer) was 148 μm.

The inner surface of the obtained laminated cup was coated with a vinylidene chloride type resin latex comprising a copolymer comprising 90% by weight of vinylidene chloride and 10% by weight of acrylonitrile (dispersion medium=water, solid concentration=30% by weight) according to the known slush coating method, and the coating was dried at 60°C for 30 minutes in an oven (air circulation type) and aged (heat-treated) at 40°C for 2 days in a thermostat air tank to obtain a laminated cup having a layer structure shown in Fig. 2-C. (outer surface: isotactic polypropylene, inner surface: vinylidene chloride type

resin). The average thickness of the vinylidene chloride type resin coating formed on the inner surface of the obtained vessel was 1.4 μm.

With respect to the obtained coated and laminated cup and the laminated cup substrate not coated with the vinylidene chloride type resin as a comparative cup, the ultraviolet ray percent transmission (UVT) at a wavelength of 280 nm, and the oxygen permeability ($QO_2$-D) and ($QO_2$-W) under low and high humidity conditions were determined according to the methods described hereinbefore to obtain results shown in Table 13.

TABLE 13

| Coating thickness (μ) of vinylidene chloride type resin | 0 | 1.4 |
|---|---|---|
| $QO_2$-D [$cm^3/m^2 \cdot day \cdot atm$] | 0.34 | 0.22 |
| $QO_2$-W [$cm^3/m^2 \cdot day \cdot atm$] | 60.35 | 4.28 |
| UVT [%] | 92 | 75 |

Example 9

A laminated bottle (inner capacity=1000 ml having a 2-layer structure shown below was formed according to the known biaxial draw hollow molding method.

Outer layer: saponified ethylene-vinyl acetate copolymer (ethylene-vinyl alcohol copolymer) having an ethylene content of 50 mole % and a saponification degree of 98.2%)

Inner layer: blend of 97% by weight of polyvinyl chloride having an average polymerization degree of 850 and 3% by weight of acrylonitrile-styrene-butadiene copolymer.

The outer layer/inner layer thickness ratio was 1/50, and the average thickness of the ethylene-vinyl alcohol copolymer layer (outer layer) was 9.7 μm.

The outer surface of the obtained laminated bottle was coated with a vinylidene chloride type resin latex comprising a copolymer comprising 70% by weight of vinylidene chloride, 10% by weight of methyl acrylate and 20% by weight of glycidyl acrylate (dispersion medium=water, solid concentration=64% by weight) according to the known spray coating method, and the coating was dried at 100°C for 10 seconds in an oven (air circulation type) and aged (heat-treated) at 100°C for 15 seconds in a thermostat air tank to obtain a laminated bottle having a layer structure shown in Fig. 2-C. (inner surface: vinyl chloride resin, outer surface: vinylidene chloride type resin). The average thickness of the vinylidene chloride type resin coating formed on the outer surface of the obtained vessel was 22.1 μm.

The coated and laminated bottle was irradiated under the same conditions as in Example 7 by using the same weather-ometer as used in Example 7.

With respect to the obtained coated bottle and the laminated bottle substrate not coated with the vinylidene chloride type resin as a comparative bottle, the ultraviolet ray percent transmission (UVT) at a wavelength of 280 nm, and the oxygen permeability ($QO_2$-D) and ($QO_2$-W) under low and high humidity conditions were determined according to the methods described hereinbefore to obtain results shown in Table 14.

TABLE 14

| Coating thickness (μ) of vinylidene chloride type resin | 0 | 22.1 |
|---|---|---|
| $QO_2$-D [$cm^3/m^2 \cdot day \cdot atm$] | 1.64 | 0.62 |
| $QO_2$-W [$cm^3/m^2 \cdot day \cdot atm$] | 37.42 | 1.05 |
| UVT [%] | 45 | 0 |

Example 10

A laminated bottle (inner capacity=500 ml) having a 3-layer structure shown below was formed according to the known co-extrusion method and biaxial draw molding method.

Outerlayer: ethylene-propylene copolymer having an ethylene content of 5% by weight

Adhesive layer: maleic anhydride-modified high density polyethylene (ER-403 supplied by Showa Denko K.K.)

Inner layer: ethylene-vinyl alcohol copolymer having an ethylene content of 45 mole % and a saponification degree of 98.5%

The outer layer/adhesive layer/inner layer thickness ratio was 20/0.1/1, and the average thickness of the ethylene-vinyl alcohol copolymer layer (inner layer) was 25.2 μm.

The inner surface of the obtained laminated bottle was coated with a vinylidene chloride type resin latex comprising 100 parts by weight copolymer comprising 80% by weight of vinylidene chloride, 10% by

weight of methyl methacrylate and 10% by weight of acrylic monoglyceride and 50 parts by weight of vinyl chloride (dispersion medium=water, solid concentration=45% by weight) according to the known slush coating method, and the coating was dried at 80°C for 2 minutes in an oven (air circulation type) and aged (heat-treated) at 30°C for 7 days in a thermostat air tank to obtain a laminated bottle having a layer structure shown in Fig. 2-C. (outer surface: ethylene-propylene copolymer, inner surface: vinylidene chloride type resin). The average thickness of the vinylidene chloride type resin coating formed on the inner surface of the obtained vessel was 11.3 μm.

With respect to the obtained coated and laminated bottle and the laminated bottle substrate not coated with the vinylidene chloride type resin as a comparative bottle, the ultraviolet ray percent transmission (UVT) at a wavelength of 280 nm, and the oxygen permeability ($QO_2$-D) and ($QO_2$-W) under low and high humidity conditions were determined according to the methods described hereinbefore to obtain results shown in Table 15.

TABLE 15

| Coating thickness (μ) of vinylidene chloride type resin | 0 | 11.3 |
|---|---|---|
| $QO_2$-D [$cm^3/m^2 \cdot day \cdot atm$] | 1.09 | 0.41 |
| $QO_2$-W [$cm^3/m^2 \cdot day \cdot atm$] | 42.18 | 1.87 |
| UVT [%] | 94 | 52 |

Example 11

A laminated tube (inner capacity=200 ml) having a 3-layer structure shown below was formed according to the known co-extrusion method and hollow molding method.

Inner and outer layers: blend comprising 70% by weight of the same ethylene-vinyl alcohol copolymer as used in Example 6, 20% by weight of low-density polyethylene having a density of 0.922 g/cm³ and a melt index of 0.5 g/10 min. and 10% by weight of an ionomer of the $Na^+$ ion type.

Intermediate layer: low-density polyethylene having a density of 0.922 g/cm³ and a melt index of 0.5 g/10 min.

The inner or outer layer/intermediate layer thickness ratio was 1/10, and the average total thickness of the layer of the blend composed mainly of the ethylene-vinyl alcohol copolymer (inner and outer layers) was 29.6 μm.

A vinylidene chloride type resin latex having the same composition as described in Example 6 (dispersion medium=water, solid concentration=47% by weight) was coated on the inner and outer surfaces of the obtained laminated tube according to the known dip coating method. The coating was dried at 50°C for 1 hour in an oven of the air circulation type and aged (heat-treated) at 40°C for 3 days in a thermostat air tank to obtain a coated laminated tube having a layer structure shown in Fig. 2-D. The average coating thickness of the vinylidene chloride type resin coated on the outer surface of the tube was 3.4 μm and the average coating thickness of the vinylidene chloride type resin coated in the inner surface of the tube was 3.1 μm (the total thickness was 6.5 μm).

The coated and laminated tube was irradiated under the same conditions as described in Example 7 by using the same weather-ometer as used in Example 7.

With respect to the obtained coated and laminated tube and the laminated tube substrate not coated with the vinylidene chloride type resin as a comparative tube, the ultraviolet ray percent transmission (UVT) at a wavelength of 280 nm, and the oxygen permeability ($QO_2$-D) and ($QO_2$-W) under low and high humidity conditions were determined according to the methods described hereinbefore to obtain results shown in Table 16.

TABLE 16

| Coating thickness (μm) of vinylidene chloride type resin | 0 | 1.4 (total thickness) |
|---|---|---|
| $QO_2$-D [$cm^3/m^2 \cdot day \cdot atm$] | 0.97 | 0.32 |
| $QO_2$-W [$cm^3/m^2 \cdot day \cdot atm$] | 33.15 | 0.95 |
| UVT [%] | 95 | 2 |

Example 12

Each of the five bottles described in Example 6 was filled with a commercially available soybean oil packed in an 18-liter can, and the mouth was sealed with a laminated film comprising an aluminum foil. The filled bottles were stored for 2 months in a thermostat tank maintained at a temperature of 30°C and a relative humidity of 80% (hereinafter referred to as "dark place") or a thermostat tank maintained at a

temperature of 30°C and a relative humidity of 80% and provided with a light source of 1000 luxes (hereinafter referred to as "bright place").

The soybean oil stored in each bottle was taken out and the peroxide value was determined according to the standard oil and fat analysis test method (Japanese Association of Oil Chemistry).

The obtained results are shown in Table 17. Each value is a mean value calculated from the values of three samples.

TABLE 17

| Coating thickness (μm) of vinylidene chloride type resin | Peroxide value [meq/kg] | | | | |
|---|---|---|---|---|---|
| | 0 | 2.9 | 6.4 | 9.7 | 38.3 |
| stored in dark place | 2.45 | 1.11 | 1.06 | 1.04 | 1.03 |
| stored in bright place | 7.95 | 2.01 | 1.66 | 1.62 | 1.58 |

From the results shown in Table 17, it will readily be understood that because of the presence of the vinylidene chloride type resin, the peroxide value of the soybean oil is reduced and increase of the peroxide value by irradiation is controlled.

Example 13

Each of the two laminated cups described in Example 7 was filled with a concentrated grape juice and the mouth was sealed with a laminated film comprising an aluminum foil. The filled cups were stored for 3 months in a thermostat tank maintained at a temperature of 30°C and a relative humidity of 80% (hereinafter referred to as "dark place") or a thermostat tank maintained at a temperature of 30°C and a relative humidity of 80% and provided with a light source of 1000 luxes (hereinafter referred to as "bright place").

With respect to the concentrated grape juice filled in each cup, the change ratio of the absorbance at 520 nm (absorbance after storing/absorbence just after filling) was determined by using a spectrophotometer.

The obtained results are shown in Table 18. Each value is a mean value calculated from the values of three samples.

TABLE 18

| Coating thickness (μ) of vinylidene chloride type resin | Absorbance (520 nm) | |
|---|---|---|
| | 0 | 18.1 μm* |
| stored in dark place | 0.63 | 0.98 |
| stored in bright place | 0.46 | 0.98 |

Note

*: total thickness

Example 14

Each of the two laminated cups described in Example 8 was filled with a commercially available white miso paste, and the mouth was sealed with a laminated film comprising an aluminum foil. The filled cups were stored for 4 months in a thermostat tank maintained at a temperature of 30°C and a relative humidity of 80% (hereinafter referred to as "dark place") or a thermostat tank maintained at a temperature of 30°C and a relative humidity of 80% and provided with a light source of 1000 luxes (hereinafter referred to as "bright place").

Then, the brightness of the miso paste filled in each cup was measured by using a color difference meter, and the brightness change ratio was calculated according to the following formula:

$$\text{Color fading ratio} = \frac{\text{brightness after storing}}{\text{brightness just after filling}}$$

The obtained results are shown in Table 19. Each value is a mean value calculated from the values of three samples.

TABLE 19

| Coating thickness (μm) of vinylidene chloride type resin | Brightness (%) | |
|---|---|---|
| | 0 | 1.4 μ |
| stored in dark place | 0.89 | 0.96 |
| stored in bright place | 0.79 | 0.93 |

Example 15

Each of the two laminated bottles described in Example 10 was filled with tomato puree and the mouth was sealed with a laminated film comprising an aluminum foil. The filled bottles were stored for 6 months in a thermostat tank maintained at a temperature of 30°C and a relative humidity of 80% (hereinafter referred to as "dark place") or a thermostat tank maintained at a temperature of 30°C and a relative humidity of 80% and provided with a light source of 1000 luxes (hereinafter referred to as "bright place").

Then, the a value of the tomato puree filled in each bottle was measured by using a color difference meter, and the α value charge ratio was calculated according to the following formula:

$$\alpha \text{ Value change ratio} = \frac{\text{a value after storing}}{\text{a value just after filling}}$$

The obtained results are shown in Table 20. Each value is a mean value calculated from the values of three samples.

TABLE 20

| Coating thickness (μ) of vinylidene chloride type resin | α Value (red) | |
|---|---|---|
| | 0 | 11.3 μ |
| stored in dark place | 0.79 | 0.96 |
| stored in bright place | 0.56 | 0.92 |

Example 16

Each of the two laminated tube described in Example 11 was filled with a commercially available soybean oil packed in a 18-liter can, and the mouth was sealed with a laminated film comprising an aluminum foil. The filled tubes were stored for 3 months in a thermostat tank maintained at a temperature of 30°C and a relative humidity of 80% (hereinafter referred to as "dark place") or a thermostat tank maintained at a temperature of 30°C and a relative humidity of 80% and provided with a light source of 1000 luxes (hereinafter referred to as "bright place").

With respect to the soybean oil filled in each tube, the change ratio of the absorbance at 470 nm (absorbance after storing/absorbance just after filling) was determined by using a spectrophotometer.

The obtained results are shown in Table 21. Each value is a mean value calculated from the values of three samples.

TABLE 21

| Coating thickness (μm) of vinylidene chloride type resin | Absorbance (470 nm) | |
|---|---|---|
| | 0 | 6.5 μm* |
| stored in dark place | 0.80 | 0.98 |
| stored in bright place | 0.34 | 0.97 |

Note

*: total thickness

Example 17

A 3-layer laminated plastic web comprising an outer layer (melt-extrudable moisture-resistant thermoplastic resin layer 8 or 8′ in Figs. 2-A through 2-H) of a high-density polyethylene resin having a melt index of 0.3 g/10 min (ASTM D-1238), an adhesive layer of maleic anhydride-modified high-density

polyethylene (Modic® H-31B supplied by Mitsubishi Petrochemical Co.) and an inner layer of a saponified ethylene-vinyl acetate copolymer (ethylene-vinyl alcohol copolymer) having an ethylene content of 30 mole % and a saponification degree of 99% (high-density polyethylene layer/adhesive layer/ethylene-vinyl alcohol copolymer layer thickness ratio=5/0.5/1; total thickness=0.8 mm) was prepared according to the known co-extrusion method using an extruder for the high-density polyethylene having a diameter of 65 mm and provided with a metering screw having an effective length of 1430 mm, an extruder for the ethylene-vinyl alcohol copolymer having a diameter of 40 mm and provided with a metering screw having an effective length of 800 mm, an extruder for the adhesive having a diameter of 32 mm and provided with a metering screw having an effective length of 704 mm and a three-ply flat die having a lip width of 520 mm.

The high-density polyethylene side of the obtained web was coated with a vinylidene chloride type resin latex comprising a copolymer comprising 95% by weight of vinylidene chloride and 5% by weight of acrylonitrile (dispersion medium=water, solid concentration=30% by weight) according to the known flow coating method, and the coating was dried at 50°C for 55 minutes in a perfect oven (explosion-proof type) and aged (heat-treated) at 90°C for 3 minutes in a thermostat air tank to obtain a laminated web having a layer structure shown in Fig. 2-G. The thickness of the vinylidene chloride type resin coating formed on the high-density polyethylene side of the obtained web was 25 µm.

A cylindrical laminated cup comprising the outer surface layer of the vinylidene chloride type resin and the inner surface layer of the ethylene-vinyl alcohol copolymer layer was formed from the above laminated web according to the known plug assist vaccum air-pressure forming method. This laminated cup is designated as "cup F").

With respect to the obtained cup F and the laminated cup substrate not coated with the vinylidene chloride type resin (designated as "cup nF") as a comparative bottle, the ultraviolet ray percent transmission (UVT) at a wavelength of 280 nm, the oxygen permeability ($QO_2$-D) and the see-through property (doc) were determined according to the methods described hereinbefore to obtain results shown in Tables 22 and 23.

TABLE 22

| Sample | UVT (%) | $QO_2$-D ($cm^3/m^2 \cdot day \cdot atm$) |
|---|---|---|
| F | 41 | 3.7 |
| nF | 58 | 7.2 |

TABLE 23

| | Points of vessels | doc |
|---|---|---|
| vessels compared | F:nF | |
| empty state | 5:5 | +0.50 |
| filled state | 10:0 | |

From the results shown in Tables 22 and 23, it will readily be understood that by coating the vinylidene chloride type resin on the laminated cup substrate, the barrier property to ultraviolet rays (UVT) and oxygen ($QO_2$-D) are improved and also the see-through property (doc) is highly improved.

Example 18

A 2-layer laminated web comprising an inner layer (melt-extrudable moisture-resistant thermoplastic resin layer 8 or 8′ in Figs. 2-A through 2-H) of atactic polystyrene having a melt index of 3.2 g/10 min (ASTM D-1238) and an outer layer of a saponified ethylene-vinyl acetate copolymer (ethylene-vinyl alcohol copolymer) having an ethylene content of 35 mole % and a saponification degree of 96% (polystyrene layer/ethylene-vinyl alcohol copolymer layer thickness ratio=20/1; total thickness=0.7 mm) was prepared according to the known co-extrusion molding method, using the same extruder for the polystyrene as that used in Example 17 and having a diameter of 65 mm and the same extruder for the ethylene-vinyl alcohol copolymer as that used in Example 17 and a diameter of 32 mm and a two-ply flat die having a lip width of 600 mm.

The polystyrene side of the obtained laminated web was coated with a vinylidene chloride type resin latex comprising 100 parts by weight of a copolymer comprising 80% by weight of vinylidene chloride, 10% by weight of methyl acrylate and 10% by weight of acrylic monoglyceride and 40 parts by weight of vinyl chloride (dispersion medium=water, solid concentration=22% by weight) according to the known bar coating method, and the coating was dried at 80°C for 2 minutes in a perfect oven. The coating and drying operations were conducted 3 times and the coating was aged (heat-treated) at 30°C for 7 days in a thermostat air tank to obtain a laminated web having a layer structure shown in Fig. 2-G. The thickness of the vinylidene chloride type resin coating formed on the polystyrene side of the obtained web was 9.6 µm.

A cylindrical laminated cup comprising the inner surface layer of the vinylidene chloride type resin and the outer surface layer of the ethylene-vinyl alcohol copolymer layer was formed from the above laminated web according to the known solid phase air-pressure forming method. This laminated cup is designated as "cup G").

With respect to the obtained cup G and the laminated cup substrate not coated with the vinylidene chloride type resin (designated as "cup nG") as a comparative cup, the ultraviolet ray percent transmission (UVT) at a wavelength of 350 nm, the oxygen permeability ($QO_2$-D) and the flavor-retaining property (FLR) were determined according to the methods described hereinbefore to obtain results shown in Tables 24 and 25.

TABLE 24

| Sample | UVT (%) | $QO_2$-D ($cm^3/m^2 \cdot day \cdot atm$) |
|---|---|---|
| G | 17 | 5.2 |
| nG | 48 | 13.5 |

TABLE 25

| | Sample G | Sample nG |
|---|---|---|
| | FLR (number of panel-members) | |
| better bottle indicated by panelers | 24 | 0 |

The cups G and nG were filled with commercially available tomato puree just after opening, and the mouth of each cup was sealed with a laminate film comprising an aluminum foil. The filled cups were allowed to stand still at a temperature of 30°C and a relative humidity of 80% in a bright place (1000 luxes).

Then, the a value of the tomato puree filled in each cup was measured by using a color difference meter, and the color fading ratio was calculated according to the following formula:

$$\text{Color fading ratio} = \frac{\text{a value after standing}}{\text{a value just after opening}}$$

The color fading ratio of the tomato puree filled in the cup G was 0.97, while the color fading ratio of the tomato puree filled in the cup nG was 0.70.

These tomato purees after standing were taken by 24 panel-members, and they were compared with each other in the flavor and taste. All of the 24 panel-members answered that the tomato puree filled in the cup G was better in the flavor and taste.

Example 19

A single-layer sheet having a thickness was prepared from a saponified ethylene-vinyl acetate copolymer (ethylene-vinyl alcohol copolymer) having an ethylene content of 59 mole % and a saponification degree of 96% according to the known melt-extruding method using an extruder having a diameter of 40 mm and provided with a metering screw having an effective length of 800 mm and a single-ply flat die having a lip width of 300 mm.

The outer surface of the obtained single-layer sheet was coated with a vinylidene chloride type resin latex comprising a copolymer comprising 89% by weight of vinylidene chloride, 4% by weight of acrylonitrile, 5% by weight of methyl methacrylate and 2% by weight of methyl acrylate (dispersion medium=water, solid concentration=52% by weight) according to the known flow coating method, and the coating was dried at 80°C for 2 minutes in a perfect oven (air circulation type). Then, the inner surface of the sheet was coated with the same latex according to the known dip coating method and the coating was dried at 80°C for 3 minutes in the above oven.

Thus, a laminated sheet having a layer structure as shown in Fig. 2-B (substrate=ethylene-vinyl alcohol copolymer; inner and outer surface layers=vinylidene chloride type resin) was obtained. The vinylidene chloride type resin coating formed on the outer surface of the laminated sheet had an average thickness of 10.7 μm and the vinylidene chloride type resin coating formed on the inner surface had an average thickness of 7.4 μm (the total thickness was 18.1 μm).

The laminated plastic sheet was formed into a cylindrical cup having a diameter (inner diameter) of 4 cm, a height of 11 cm and an average wall thickness of 0.4 mm according to the known plug assist vacuum air-pressure forming method.

With respect to the obtained coated cup and the ethylene-vinyl alcohol copolymer cup substrate not coated with the vinylidene chloride type resin as a comparative cup, the ultraviolet ray percent transmission (UVT) at a wavelength of 280 mμ, and the oxygen permeability ($QO_2$-D) and ($QO_2$-W) under low and high humidity conditions were determined according to the methods described hereinbefore to obtain results shown in Table 26.

TABLE 26

| Coating thickness (μ) of vinylidene chloride type resin | 0 | 18.1* |
|---|---|---|
| $QO_2$-D [$cm^3/m^2 \cdot day \cdot atm$] | 2.11 | 0.90 |
| $QO_2$-W [$cm^3/m^2 \cdot day \cdot atm$] | 26.5 | 1.62 |
| UVT [%] | 87 | 0 |

Note
*: total thickness

Each of these two coated and uncoated cups was filled with 135 $cm^3$ of city water and the mouth was sealed with a laminated film including an aluminum foil. The filled bottles were allowed to stand still at a temperature of 50°C and a relative humidity of 10% for 21 days.

With respect to each cup, the weight of city water lost by 21 days' standing was determined by an even balance having a measurable limit of 500 mg and the water loss ratio was calculated according to the following formula:

$$\text{Water loss ratio} = 1 - \frac{\text{amount of water after standing}}{\text{amount of water just after filling}}$$

The water loss ratios in the cup composed only of the ethylene-vinyl alcohol copolymer was 0.84. However, the water loss in the laminated cup coated with the vinylidene chloride type resin could not be measured within the measurable range of the balance.

Each of the above two laminated cups was filled with a commercially available concentrated grape juice packed in a 18-liter can, and the mouth was sealed with a laminated film comprising an aluminum foil. The filled bottles were stored for 3 months in a thermostat tank maintained at a temperature of 30°C and a relative humidity of 80% (hereinafter referred to as "dark place") or a thermostat tank maintained at a temperature of 30°C and a relative humidity of 80% and provided with a light source of 1000 luxes (hereinafter referred to as "bright place").

With respect to the concentrated grape juice filled in each cup, the change ratio of the absorbance at 520 mμ (absorbance after storing/absorbance just after filling) was determined by using a spectrophotometer.

The obtained results are shown in Table 27. Each value is a mean value calculated from the values of three samples.

TABLE 27

| Coating thickness (μm) of vinylidene chloride type resin | Absorbance (520 mμ) | |
|---|---|---|
| | 0 | 18.1 μm* |
| stored in dark place | 0.63 | 0.98 |
| stored in bright place | 0.46 | 0.98 |

Note
*: total thickness

Example 20

A laminated sheet having a layer structure shown below was formed according to the known co-extrusion method using an upper layer extruded having a diameter of 65 mm and provided with a metering screw having an effective length of 1430 mm, a lower layer extruder having a diameter of 40 mm and provided with a metering screw having an effective length of 800 mm, an adhesive layer extruder having a diameter of 32 mm and provided with a metering screw having an effective length of 704 mm and a three-ply flat die having a lip width of 520 mm (the total thickness of the sheet was 0.8 mm and the upper layer/adhesive layer/lower layer thickness ratio was 1/0.1/1).

A square laminated cup (inner capacity=540 ml) having a 3-layer structure shown below was formed according to the known co-extrusion method and solid phase pressure forming method.

Upper layer: isotactic polypropylene having a melt index of 1.4 g/10 min and a density of 0.91 $g/cm^3$.

Adhesive layer: maleic anhydride-modified polypropylene (P-40B supplied by Mitsubishi Petrochemical Co.).

Lower layer: ethylene-vinyl alcohol copolymer having an ethylene content of 25 mole % and a saponification degree of 99.6%.

The lower layer surface of the obtained sheet (ethylene-vinyl alcohol copolymer layer) was coated with a vinylidene chloride type resin latex comprising a copolymer comprising 90% by weight of vinylidene chloride and 10% by weight of acrylonitrile (dispersion medium=water, solid concentration=30% by weight) according to the known dip coating method, and the coating was dried at 60°C for 30 minutes in an oven (air circulation type) and aged (heat-treated) at 40°C for 2 days in a thermostat air tank to obtain a laminated bottle having a layer structure shown in Fig. 2-C (one surface layer was composed of the isotactic polypropylene and the opposite surface layer was composed of the vinylidene chloride type resin). The average coating thickness of the vinylidene chloride type resin formed on the lower layer surface of the obtained sheet was 4.4 µm.

A square laminated cup (inner capacity=540 ml) was formed from the above coated and laminated sheet according to the known solid phase pressure forming method so that the upper layer (isotactic polypropylene layer) was formed into an outer layer of the cup and the vinylidene chloride type resin layer was located on the inner surface of the cup.

With respect to the obtained coated and laminated cup and the laminated cup substrate not coated with the vinylidene chloride type resin as a comparative cup, the ultraviolet ray percent transmission (UVT) at a wavelength of 280 mµ, and the oxygen permeability ($QO_2$-D) and ($QO_2$-W) under low and high humidity conditions were determined according to the methods described hereinbefore to obtain results shown in Table 28.

TABLE 28

| Coating thickness (µm) of vinylidene chloride type resin | 0 | 4.4 |
|---|---|---|
| $QO_2$-D [$cm^3/m^2 \cdot day \cdot atm$] | 0.34 | 0.22 |
| $QO_2$-W [$cm^3/m^2 \cdot day \cdot atm$] | 60.35 | 4.28 |
| UVT [%] | 92 | 75 |

Each of the two laminated cups was filled with a commercially available white miso paste, and the mouth was sealed with a laminated film comprising an aluminum foil. The filled cups were stored for 4 months in a thermostat tank maintained at a temperature of 30°C and a relative humidity of 80% (hereinafter referred to as "dark place") or a thermostat tank maintained at a temperature of 30°C and a relative humidity of 80% and provided with a light source of 1000 luxes (hereinafter referred to as "bright place").

Then, the brightness of the miso paste filled in each cup was measured by using a color difference meter, and the brightness change ratio was calculated according to the following formula:

$$\text{Color fading ratio} = \frac{\text{brightness after storing}}{\text{brightness just after filling}}$$

The obtained results are shown in Table 29. Each value is a mean value calculated from the values of three samples.

TABLE 29

| Coating thickness (µm) of vinylidene chloride type resin | Brightness (%) | |
|---|---|---|
| | 0 | 4.4 µm |
| stored in dark place | 0.89 | 0.96 |
| stored in bright place | 0.79 | 0.93 |

**Claims**

1. A plastic vessel having a plastic vessel substrate which comprises a resin layer comprising at least 50 weight percent of an ethylene-vinyl alcohol copolymer, and a coating layer formed on at least one surface of the plastic vessel substrate, said coating layer being composed mainly of a copolymer comprising (a) 99 to 70% by weight based on the total weight of (a) and (b) of vinylidene chloride, (b) 1 to 30% by weight based on the total weight of (a) and (b) of at least one acrylic or methacrylic monomer, and (c) optionally up to 100 parts by weight of at least one other ethylenically unsaturated monomer per 100 parts by weight of the total amount of (a) and (b), said copolymer having an oxygen permeability constant of less than

$9 \times 10^{-14}$ $cm^3 \cdot cm/cm^2 \cdot sec \cdot cmHg$ as measured at a temperature of 20°C and a relative humidity of 100% and a water vapor permeability constant of less than $3 \times 10^{-3}$ $g \cdot cm/m^2 \cdot day$ as determined according to the method of JIS Z-0208.

2. A vessel as claimed in claim 1, wherein the ethylene-vinyl alcohol copolymer has an ethylene content of 20 to 80 mole % and a degree of saponification of at least 90%.

3. A vessel as claimed in claim 1 or 2, wherein the vinylidene chloride type resin coating layer has a thickness of 0.5 to 50 µm.

4. A vessel as claimed in any one of the preceding claims wherein optional component (c) is present in an amount of up to 50 parts per 100 parts of components (a) and (b).

5. A vessel as claimed in any one of the preceding claims, wherein the plastic vessel substrate comprises a surface layer composed mainly of an ethylene-vinyl alcohol copolymer and wherein the vinylidene chloride type resin coating layer is formed contiguously to said surface layer.

6. A vessel as claimed in claim 1, 2 or 3, wherein the plastic vessel substrate comprises a layer composed mainly of an ethylene-vinyl alcohol copolymer and a coating layer of the vinylidene chloride type resin is formed on each of the surfaces of the substrate.

7. A vessel as claimed in any one of claims 1 to 5, wherein the plastic vessel substrate comprises a laminate of a melt-moldable moisture-resistant thermoplastic resin and a resin composed mainly of an ethylene-vinyl alcohol copolymer.

8. A vessel as claimed in any one of claims 1 to 3, wherein the plastic vessel substrate comprises inner and outer surface layers composed of an olefin resin and an intermediate layer of an ethylene-vinyl alcohol copolymer interposed between the inner and outer surface layers.

9. A vessel as claimed in any one of the preceding claims, which is a plastic bottle.

10. A vessel as claimed in any one of the preceding claims which is a plastic cup.

11. A vessel as claimed in claim 9 or 10, wherein the plastic bottle or cup is molecularly oriented monoaxially or biaxially.

12. A vessel as claimed in any one of claims 1 to 8, which is a squeezable plastic tube.

13. A plastic cup as claimed in claim 10, obtained by draw-forming a plastic film or sheet, said film or sheet comprising (A) a laminate comprising (a) at least one layer composed mainly of an ethylene-vinyl alcohol copolymer and (b) at least one layer of a melt-moldable moisture-resistant thermoplastic resin, said layer (b) being present on at least one surface of the laminate, and (B) a vinylidene chloride type resin coating layer formed contiguously to the layer (a) of the laminate.

14. A plastic cup as claimed in claim 13, wherein the moisture-resistant thermoplastic resin is an olefin resin.

15. A plastic cup as claimed in claim 13 or 14, wherein the vinylidene chloride type resin coating layer has a thickness of 0.5 to 50 µm.

16. A plastic cup as claimed in claim 13, 14 or 15, wherein the laminate is a laminated sheet or film formed by co-extrusion.

17. A plastic sheet suitable for forming plastic vessels having an improved oxygen barrier property, which comprises a plastic sheet substrate, at least one surface layer of which is formed of a resin which consists of or comprises at least 50 weight percent of an ethylene-vinyl alcohol copolymer, wherein a vinylidene chloride type resin coating layer is formed contiguously to said surface layer, said vinylidene chloride type resin coating layer having the composition defined in claim 1.

**Patentansprüche**

1. Kuststoffbehälter, gekennzeichnet durch ein Kunststoffbehältersubstrat aus einer Kunstharzschicht von mindestens 50 Gew.-% eines Äthylen-Vinylalkohol-Copolymers und eine Überzugsschicht auf mindestens einer Fläche des Kunststoffbehältersubstrats, die im wesentlichen aus einem Copolymer besteht, das

(a) 99 bis 70 Gew.-%, bezogen auf das Gesamtgewicht von (a) und (b), Vinylidenchlorid,

(b) 1 bis 30 Gew.-%, bezogen auf das Gesamtgewicht von (a) und (b), mindestens eines Acrylsäure- oder Methacrylsäure-Monomers und

(c) gegebenenfalls bis zu 100 Gewichtsteile mindestens eines anderen äthylenisch-ungesättigten Monomers je 100 Gewichtsteile der Gesamtmenge von (a) und (b) enthält und

eine Sauerstoffpermeabilitätskonstante von unter $9 \times 10^{-14}$ $cm^3 \cdot cm/cm^2 \cdot s \cdot cmHg$, bestimmt bei einer Temperatur von 20°C und einer relativen Feuchtigkeit von 100%, und

eine Wasserdampfpermeabilitätskonstante unter $3 \times 10^{-3}$ $g \cdot cm/m^2 \cdot d$, bestimmt gemäß JIS Z-0208 hat.

2. Behälter nach Anspruch 1, dadurch gekennzeichnet, daß das Äthylen-Vinylalkohol-Copolymer einen Äthylengehalt von 20 bis 80 mol-% und einen Verseifungsgrad von mindestens 90% hat.

3. Behälter nach Anspruch 1 oder 2, dadurch gekennzeichnet, daß die Vinylidenchloridharz-Überzugsschicht eine Dicke von 0,5 bis 50 µm hat.

4. Behälter nach einem der vorstehenden Ansprüche, dadurch gekennzeichnet, daß die Komponente (c) gegebenenfalls in einer Menge bis zu 50 Teilen je 100 Teile der Komponenten (a) und (b) vorhanden ist.

5. Behälter nach einem der vorstehenden Ansprüche, dadurch gekennzeichnet, daß das Kunststoffbehältersubstrat eine Oberflächenschicht aus im wesentlichen einem Äthylen-Vinylalkohol-Copolymer aufweist und die Vinylidenchloridharz-Öberzugsschicht angrenzend an diese Oberflächenschicht gebildet wird.

6. Behälter nach einem der Ansprüche 1, 2 oder 3, dadurch gekennzeichnet, daß das Kunststoffbehältersubstrat eine Schicht aus im wesentlichen einem Äthylen-Vinylalkohol-Copolymer ist und eine Überzugsschicht aus Vinylidenchloridharz auf jeder der Substratfläche gebildet wird.

7. Behälter nach einem der Ansprüche 1 bis 5, dadurch gekennzeichnet, daß das Kunststoffbehältersubstrat ein Laminat eines durch Schmelzen formbaren, feuchtigkeitsbeständigen, thermoplastischen Kunstharzes und eines im wesentlichen aus einem Äthylen-Vinylalkohol-Copolymer bestehenden Kunstharzes, ist.

8. Behälter nach einem der Ansprüche 1 bis 3, dadurch gekennzeichnet, daß das Kunststoffbehältersubstrat eine innere und eine äußere Oberflächenschicht aus einem Olefinkunstharz und eine Zwischenschicht aus einem Äthylen-Vinylalkohol-Copolymer zwischen der inneren und der äußeren Oberflächenschicht umfaßt.

9. Behälter nach einem der vorstehenden Ansprüche als Kunststofflasche.

10. Behälter nach einem der vorstehenden Ansprüche als Kunststoffschale.

11. Behälter nach Anspruch 9 oder 10, dadurch gekennzeichnet, daß die Kunststofflasche oder -schale molekular monoaxial oder biaxial orientiert ist.

12. Behälter nach einem der Ansprüche 1 bis 8 als zusammendrückbares Kunststoffrohr.

13. Kunststoffschale nach Anspruch 10, erhältlich durch Tiefziehen eines Kunststoffilms oder einer Kunststoffolie aus

(A) einem Laminat aus

(a) mindestens einer Schicht aus im wesentlichen einem Äthylen-Vinylalkohol-Copolymer und

(b) mindestens einer Schicht eines durch Schmelzen formbaren, feuchtigkeitsbeständigen, thermoplastischen Kunstharzes auf mindestens einer Fläche des Laminats, und

(B) einer Vinylidenchloridharz-Überzugsschicht, die angrenzend an die Schicht (a) auf dem Laminat gebildet wurde.

14. Kunststoffschale nach Anspruch 13, dadurch gekennzeichnet, daß das feuchtigkeitsbeständige, thermoplastische Kunstharz ein Olefinharz ist.

15. Kunststoffschale nach Anspruch 13 oder 14, dadurch gekennzeichnet, daß die Vinylidenchloridharz-Überzugsschicht eine Dicke von 0,5 bis 50 μm aufweist.

16. Kunststoffschale nach einem der Ansprüche 13, 14 oder 15, dadurch gekennzeichnet, daß das Laminat eine (ein) durch Coextrusion laminierte Folie oder laminierter Film ist.

17. Kunststoffolie zur Herstellung von Kunststoffbehältern mit verbesserten Sauerstoffsperreigenschaften, gekennzeichnet durch ein Kunststoffoliensubstrat, in dem mindestens eine Oberflächenschicht aus einem Harz gebildet wird, das mindestens 50 Gew.-% eines Äthylen-Vinylalkohol-Copolymers enthält oder daraus besteht und eine Vinylidenchloridharz-Beschichtung angrenzend an diese Oberflächenschicht, wobei diese Vinylidenchloridharz-Beschichtung die in Anspruch 1 angegebene Zusammensetzung hat.

**Revendications**

1. Récipient en matière plastique à enveloppe intérieure de récipient, ou substrat, en matière plastique, qui est constituée d'une couche de résine ayant au moins 50% en poids d'un copolymère éthylène-alcool vinylique, et d'une couche de revêtement formée sur au moins une face du substrat, cette couche de revêtement étant composée principalement d'un copolymère comprenant (a) 99 à 70% en poids, par rapport au poids total de (a) et (b), de chlorure de vinylidène, (b) 1 à 30% en poids, par rapport au poids total de (a) et (b), d'au moins un monomère acrylique ou méthacrylique, et (c) éventuellement, jusqu'à 100 parties en poids d'au moins d'un autre monomère éthyléniquement insaturé par 100 parties en poids de la quantité totale de (a) et (b), ledit copolymère ayant une constante de perméabilité à l'oxygène inférieure à $9\times10^{-14}$ $cm^3 \cdot cm/cm^2 \cdot cmHg$, mesurée à une température de 20°C, et une humidité relative de 100%, et une constante de perméabilité à la vapeur inférieure à $3\times10^{-3}$ $g \cdot cm/m^2 \cdot$ jour, déterminée selon la méthode de JIS Z-0208.

2. Récipient selon la revendication 1, où le copolymère éthylène-alcool vinylique a une teneur en éthylène de 20 à 80% (moles) et un degré de saponification d'au moins 90%.

3. Récipient selon la revendication 1 ou 2, où la couche de revêtement en résine du type chlorure de vinylidéne a une épaisseur de 0,5 à 50 μm.

4. Récipient selon l'une des revendications précédentes, où le composant (c) éventuel est présent en quantité allant jusqu'à 50 parties pour 100 parties des composants (a) et (b).

5. Récipient selon l'une des revendications précédentes, dans lequel le substrat de récipient en matière plastique comprend une couche de surface composée principalement d'un copolymère éthylène-alcool vinylique et où la couche de revêtement en résine du type chlorure de vinylidène est formée contigue à la dite couche de surface.

6. Récipient selon la revendication 1, 2 ou 3, où le substrat de récipient en matière plastique comprend

une couche composée principalement d'un copolymère éthylène-alcool vinylique et une couche de revêtement de résine du type chlorure de vinylidène est formée sur chacune des faces du substrat.

7. Récipient selon l'une des revendications 1 à 5, où le substrat de récipient en matière plastique comprend un stratifié d'une résine thermoplastique, résistante à l'humidité, moulable par fusion, et une résine composée principalement d'un copolymère éthylène-alcool vinylique.

8. Récipient selon l'une des revendications 1 à 3, où le substrat de récipient en matière plastique comprend des couches des faces intérieure et extérieure composées d'une résine oléfinique et une couche intermédiaire d'un copolymère éthylène-alcool vinylique, interposée entre les couches des faces intérieure et extérieure.

9. Récipient selon l'une des revendications précédentes, qui est une bouteille en matière plastique.

10. Récipient selon l'une des revendications précédentes qui est une cuvette en matière plastique.

11. Récipient selon la revendication 9 ou 10, où la bouteille ou la cuvette est orientée moléculairement, mono-axialement ou biaxialement.

12. Récipient selon l'une des revendications 1 à 8, qui est un tube en matière plastique compressible.

13. Cuvette en matière plastique selon la revendication 10, obtenue par étirage d'une pellicule ou feuille de matière plastique, ladite pellicule ou feuille comprenant (A) un stratifié comprenant (a) au moins une couche composée principalement d'un copolymère éthylène-alcool vinylique et (b) au moins une couche d'une résine thermoplastique, résistante à l'humidité, moulable par fusion, cette couche (6) étant présente sur au moins une face du stratifié et (B) une couche de revêtement de résine du type chlorure de vinylidène formée contiguë à la couche (a) du stratifié.

14. Cuvette en matière plastique, selon la revendication 13 où la résine thermoplastique résistante à l'humidité est une résine oléfinique.

15. Cuvette en matière plastique selon la revendication 13 ou 14 où la couche de revêtement de résine du type chlorure de vinylidène a une épaisseur de 0,5 à 50 µm.

16. Cuvette en matière plastique selon la revendication 13, 14 ou 15, où le stratifié est une feuille ou pellicule stratifiée formée par co-extrusion.

17. Feuille de matière plastique convenant pour former des récipients en matière plastique possédant une propriété améliorée de barrière à l'oxygène, qui comprend un stratifié en feuille de matière plastique, dont au moins une couche de surface est formée d'une résine qui consiste en ou comprend au moins 50% en poids d'un copolymère éthylène-alcool vinylique, dans laquelle une couche de revêtement de résine du type chlorure de vinylidène est formée contiguë à ladite couche de surface, cette couche de revêtement de résine du type chlorure de vinylidène ayant la composition définie dans la revendication 1.

Fig. 1

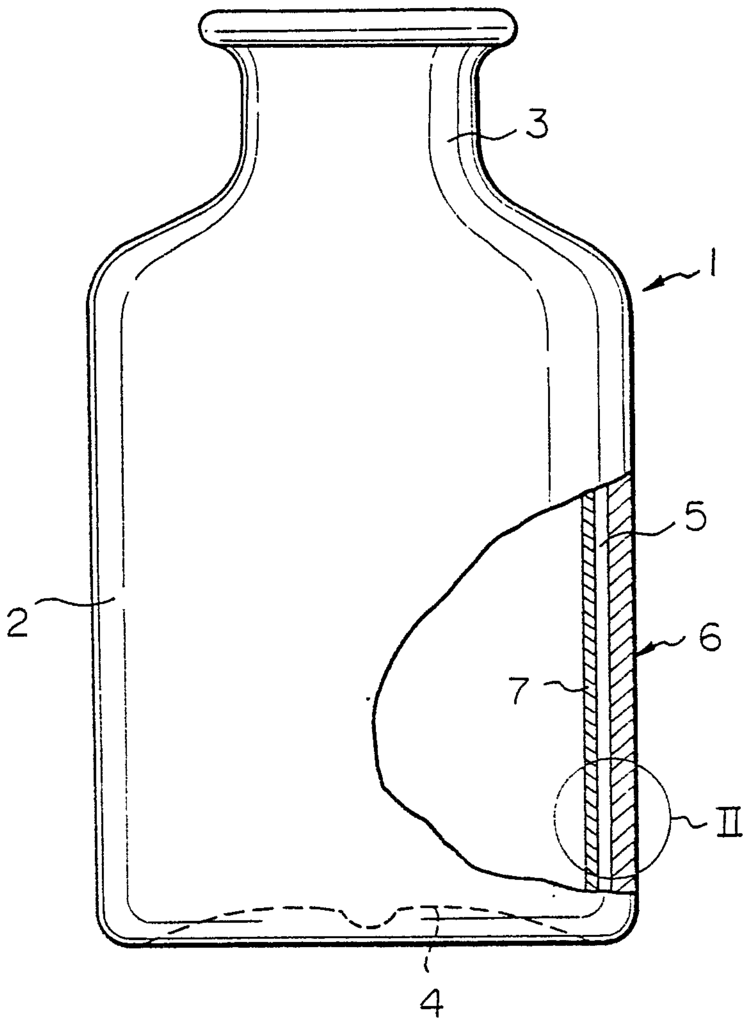

Fig. 2-A

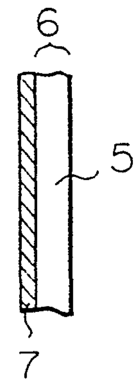


Fig. 2-B

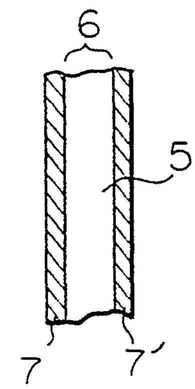


Fig. 2-C

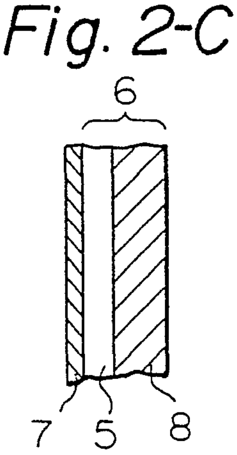


Fig. 2-D

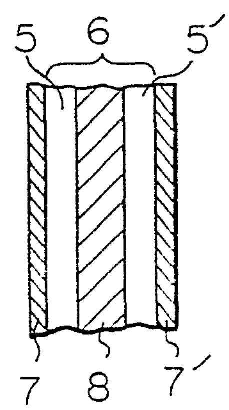


Fig. 2-E

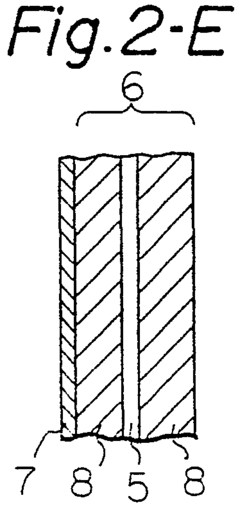


Fig. 2-F

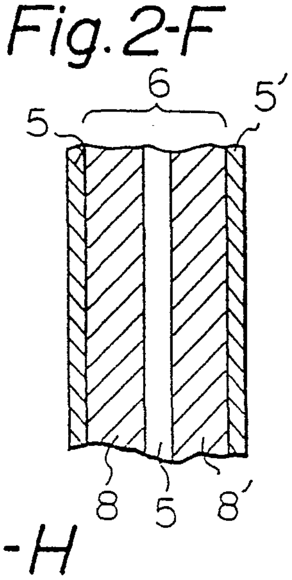


Fig. 2-G

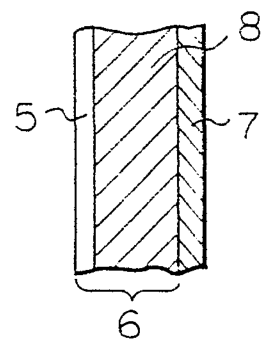


Fig. 2-H

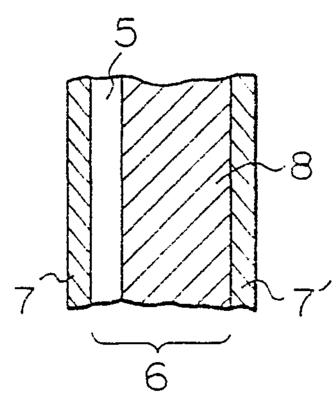

Fig. 3

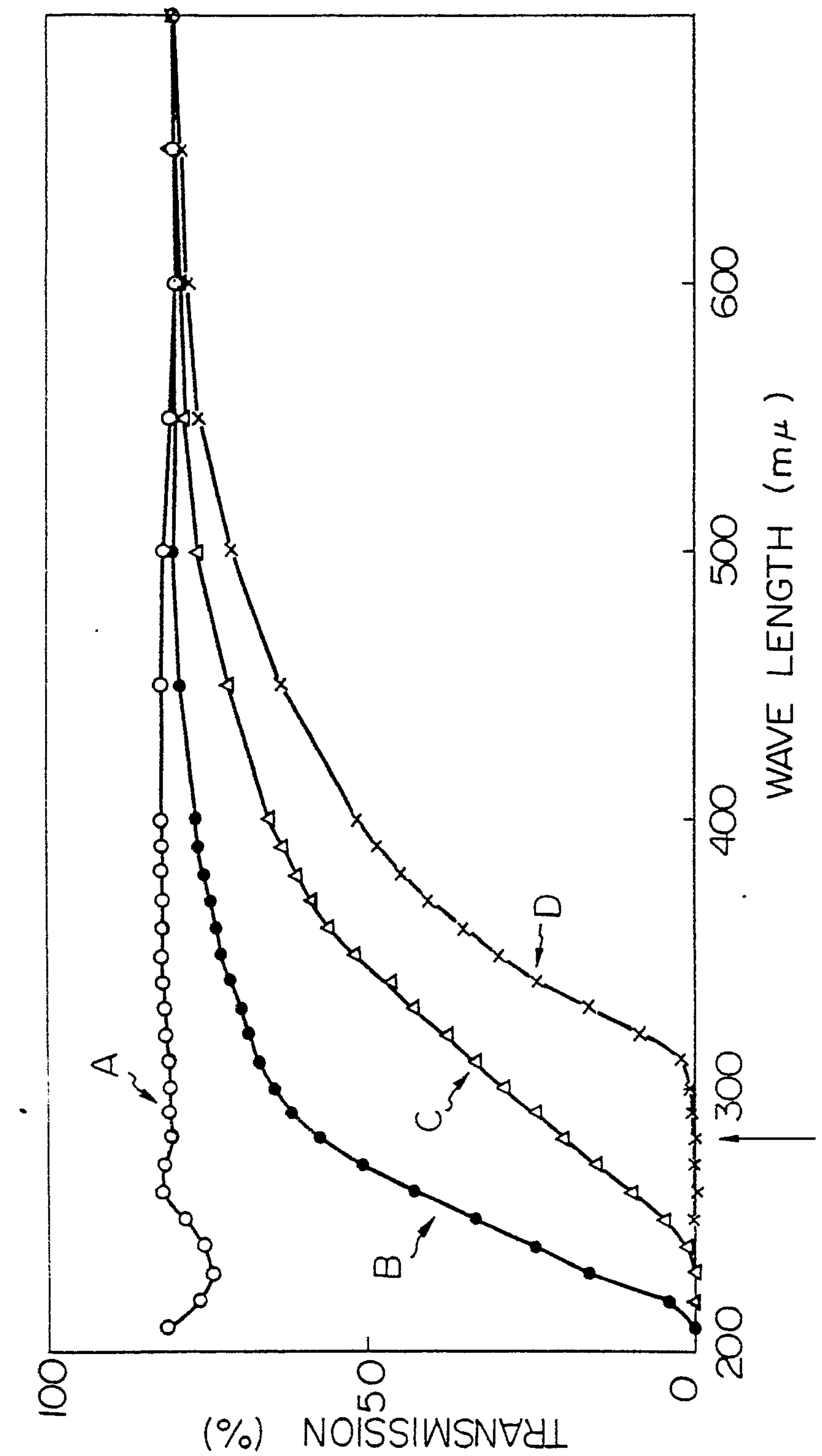

*Fig. 4*

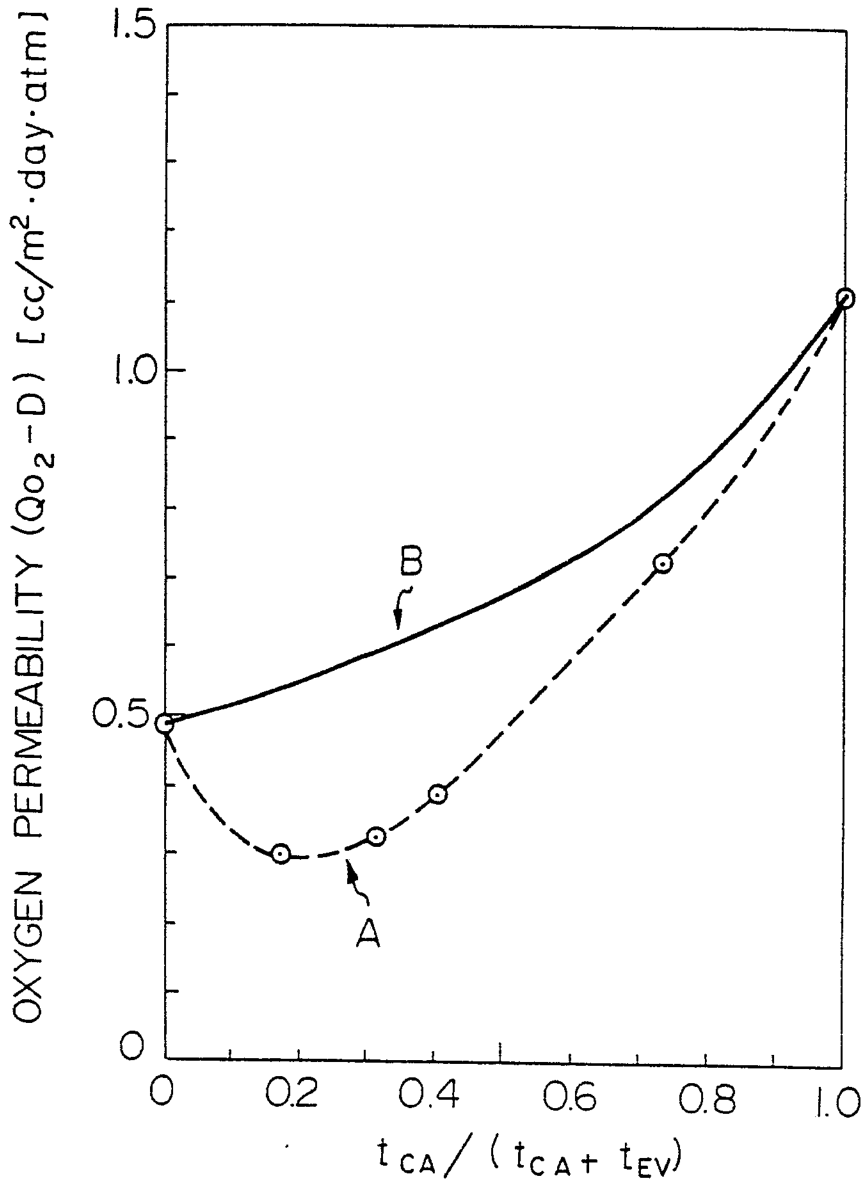
OXYGEN PERMEABILITY ($Qo_2$-D) [cc/m²·day·atm]
1.5
1.0
0.5
0
B
A
0
0.2
0.4
0.6
0.8
1.0
$t_{CA}/(t_{CA}+t_{EV})$

Fig. 5

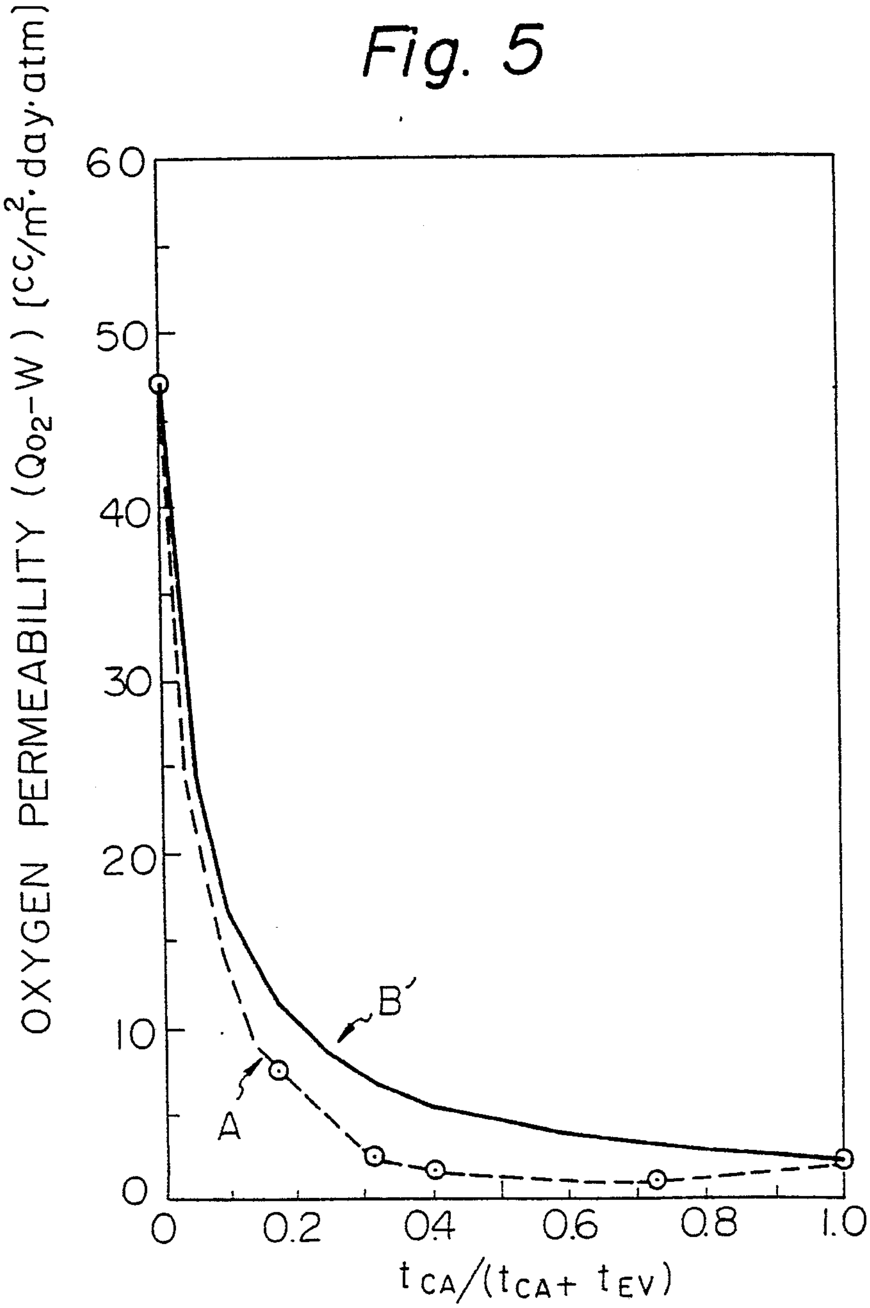
OXYGEN PERMEABILITY (QO2-W) [cc/m2·day·atm]
60
50
40
30
20
10
0
0
0.2
0.4
0.6
0.8
1.0
tCA/(tCA+ tEV)
A
B'